(19) **Europäisches Patentamt / European Patent Office / Office européen des brevets**

(11) **EP 3 167 566 B1**

(12) # EUROPEAN PATENT SPECIFICATION

(45) Date of publication and mention of the grant of the patent:
**07.04.2021 Bulletin 2021/14**

(51) Int Cl.:
*H04L 9/06* (2006.01)  *H03M 13/11* (2006.01)
*H03M 13/00* (2006.01)

(21) Application number: **15818263.4**

(22) Date of filing: **10.07.2015**

(86) International application number:
**PCT/KR2015/007196**

(87) International publication number:
**WO 2016/006968 (14.01.2016 Gazette 2016/02)**

(54) **METHOD AND APPARATUS OF JOINT SECURITY ADVANCED LDPC CRYPTCODING**

VERFAHREN UND VORRICHTUNG FÜR GEMEINSAME SICHERHEITSERWEITERTE LDPC-CRYPTCODING

PROCÉDÉ ET APPAREIL POUR CHIFFREMENT ET CODAGE LDPC AVANCÉ À SÉCURITÉ CONJOINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2014 US 201462023655 P**
**15.07.2014 US 201462024808 P**
**08.12.2014 US 201414563865**
**02.07.2015 KR 20150094780**

(43) Date of publication of application:
**17.05.2017 Bulletin 2017/20**

(73) Proprietor: **Samsung Electronics Co., Ltd.**
**Suwon-si, Gyeonggi-do 443-742 (KR)**

(72) Inventors:
• **PISEK, Eran**
**Collin County, Texas 75025 (US)**
• **ABU-SURRA, Shadi**
**Collin County, Texas 75025 (US)**

(74) Representative: **HGF**
**1 City Walk**
**Leeds LS11 9DX (GB)**

(56) References cited:
**EP-A1- 2 469 746      US-A1- 2009 041 236**
**US-A1- 2012 051 443      US-A1- 2012 084 625**

**US-A1- 2013 051 556      US-A1- 2014 016 720**

• C.P Gupta ET AL: "Joint AES Encryption and LDPC Coding", International Journal of Scientific & Engineering Research, 1 January 2013 (2013-01-01), pages 603-606, XP055216882, Retrieved from the Internet: URL:http://www.ijser.org/paper/Joint-AES-Encryption-and-LDPC-Coding.html [retrieved on 2015-09-29]
• MATHUR CHETAN NANJUNDA ET AL: "High Diffusion Cipher: Encryption and Error Correction in a Single Cryptographic Primitive", 6 June 2006 (2006-06-06), ICEC 2006; [LECTURE NOTES IN COMPUTER SCIENCE; LECT.NOTES COMPUTER], SPRINGER INTERNATIONAL PUBLISHING, CHAM, PAGE(S) 309 - 324, XP047437383, ISSN: 0302-9743 ISBN: 978-3-642-01969-2 * figure 1 *
• NING LI ET AL: "A joint encryption and error correction method used in satellite communications", CHINA COMMUNICATIONS, CHINA INSTITUTE OF COMMUNICATIONS, PISCATAWAY, NJ, USA, vol. 11, no. 3, 1 March 2014 (2014-03-01), pages 70-79, XP011549960, ISSN: 1673-5447, DOI: 10.1109/CC.2014.6825260 [retrieved on 2014-06-03]

**(Cont. next page)**

• **PISEK ERAN ET AL: "Enhanced Cryptcoding: Joint Security and Advanced Dual-Step Quasi-Cyclic LDPC Coding", 2015 IEEE GLOBAL COMMUNICATIONS CONFERENCE (GLOBECOM), IEEE, 6 December 2015 (2015-12-06), pages 1-7, XP032872434, DOI: 10.1109/GLOCOM.2014.7417284 [retrieved on 2016-02-23]**

**Description**

**Technical Field**

The present application relates generally to data encryption and decryption and, more specifically, to high performance joint security advanced low density parity check cryptcoding.

**Background Art**

Information can be transmitted over-the-air at high data rates that exceed 1 gigabits per second (Gbps) according to cellular standards, such as Long-Term Evolution Advanced (LTE-A) standards, or to wireless standards, such as Wireless Fidelity (WiFi)/Wireless Gigabit (WiGig) standards. High data rates enable many applications such as Ultra High Definition (UHD) video, high performance interactive gaming, and the cloud computing. Users can experience an increase in computing power, battery life time, and data storage availability by using cloud computing applications. Cloud computing applications cause remotely located servers to process data externally from a user equipment, which enables the user equipment to include less internal mobile processing power. Cloud computing applications automatically store the mobile pictures and videos of the user in the cloud, which increases the data storage capacity available to the user beyond the capabilities of user equipment.

**Disclosure of Invention**

**Technical Problem**

Unfortunately, intruders and eavesdroppers identified cloud computing applications as hacking opportunities and hack the data transmitted over-the-air or stored in the cloud. When a user becomes aware that personal private information stored in the cloud has been hacked or that information transmitted over-the-air to the cloud is vulnerable to hacking, that user and other people acquainted with that user may refuse to use cloud computing applications based on perception that data associated with cloud computing is unsecure. That is, hacking poses a big threat to the cloud computing concept and to the implementation of cloud computing in the marketplace.

Accordingly, various exemplary embodiments of the present disclosure provide an apparatus and method for encrypting a plaintext and generating a ciphertext having high security while being easy in transmission.

**Solution to Problem**

The invention is defined by the appended claims.

In a first embodiment, a joint security advanced Low Density Parity Check (LDPC) encryption (JSALE) encoder includes a first encryption layer to apply a first encryption key to a plaintext input data. The JSALE encoder includes a row encoding module to: generate parity bits of a current layer of an H-matrix by applying a LDPC encoding process to the encrypted input data, and generate a cryptcoded data appending the parity bits to the encrypted input data. The JSALE encoder includes a second encryption layer to initiate each subsequent round of the JSALE process through round Nr and to output a ciphertext after the Nr round.

In a second embodiment, a joint security advanced low density parity check (LDPC) encryption (JSALE) method includes initiating, by electrical processing circuitry, a first round of Nr rounds of a JSALE process by applying a first encryption layer to a plaintext input data inputted to the processing circuitry. The JSALE method includes generating, by a row encoding module, parity bits of a current layer of an H-matrix by processing the decrypted input data through an LDPC encoding process, and generating and outputting a cryptcoded data by appending the parity bits to the decrypted input data. The JSALE method includes initiating each subsequent round of the JSALE process through the Nr round and outputting a ciphertext after the Nr round.

In a third embodiment, a joint security advanced low density parity check (LDPC) decryption (JSALE) decoder for decrypting and decoding a ciphertext received from a JSALE transmitter that has common H-matrix cyclic shift values and common encryption keys is provided. The JSALE decoder includes a first decryption layer configured to initiate a first round of Nr rounds of a JSALE process by applying a first decryption to the ciphertext to output a cryptcoded data. The cryptcoded data of the first round is a last layer of the H-matrix. The cryptcoded data includes systematic bits of the last layer of the H-matrix appended to parity bits of the last layer of the H-matrix. The JSALE decoder includes a row decoding module configured to extract the parity bits of a current layer of the H-matrix from the cryptcoded data inputted to the row decoding module. The JSALE decoder includes a second decryption layer configured to initiate each subsequent round of the JSALE process through the Nr round and to output a plaintext data after the Nr round. Initiating each subsequent round includes decrementing a round index by one for each round through the Nr round.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

## Advantageous Effects of Invention

An apparatus and operation method according to various exemplary embodiments may provide a ciphertext even having high security while being easy in transmission based on a plaintext.

## Brief Description of Drawings

Other technical features may be readily apparent to one skilled in the art from the following figures, descriptions, and claims.

FIGURE 1 illustrates an example wireless network according to this disclosure;
FIGURES 2A and 2B illustrate example wireless transmit and receive paths according to this disclosure;
FIGURE 3 illustrates an example user equipment according to this disclosure;
FIGURE 4A illustrates a device configured to encrypt data and to encode the encrypted data according to this disclosure;
FIGURE 4B illustrates an encryption module according to the present disclosure;
FIGURE 5A illustrates a transmission apparatus according to the present disclosure;
FIGURE 5B illustrates a reception apparatus according to the present disclosure;
FIGURE 6 illustrates a Joint Security Advanced LDPC Cryptcoding (JSALC) system according to this disclosure;
FIGURE 7A illustrates a parity check H-matrix associated with a JSALC encoding scheme according to this disclosure;
FIGURES 7B-7C illustrate examples of a submatrix within the parity check H-matrix of FIGURE 7A;
FIGURE 8 illustrates a LDPC H-Matrix for the JSALE encryption process implemented by a JSALE LDPC encoder/decoder having a puncturing rate that is less than the basic code rate according to this disclosure;
FIGURE 9 illustrates a flowchart of the hardware implementation of the JSALE LDPC encoder 610 for according to this disclosure;
FIGURE 10 illustrates a flowchart of the hardware implementation of the of the JSALE LDPC decoder according to this disclosure;
FIGURE 11 illustrates an LDPC H-Matrix for the JSALE encryption process implemented by a JSALE LDPC encoder/decoder having a puncturing rate that is equal to the basic code rate according to this disclosure;
FIGURE 12 illustrates an example of the JSALE Encryption/Decryption H-Matrix in the case of (Re=1);
FIGURE 13 illustrates an example of a Hierarchical-Z H-matrix method according to this disclosure;
FIGURE 14 illustrates JSALE bit error rate (BER)/frame error rate (FER) performance;
FIGURE 15 illustrates the JSALE FER/BER performance with respect to the JSALE decoding number of iterations at Re=4/5 and $E_b/N_0$= 13 dB;
FIGURE 16 illustrates the SLCC decoder performance with Zp=8 (2048-bit) compared to JSALE decoder with Zp=1 (256-bit);
FIGURE 17 is a flowchart illustrating an operation of a transmission apparatus according to various exemplary embodiments of the present disclosure;

FIGURE 18 is a flowchart illustrating an encryption operation of a transmission apparatus according to various exemplary embodiments of the present disclosure;

FIGURE 19 is a flowchart illustrating an operation of a reception apparatus according to various exemplary embodiments of the present disclosure; and

FIGURE 20 is a flowchart illustrating a decryption operation of a reception apparatus according to various exemplary embodiments of the present disclosure.

**Best Mode for Carrying out the Invention**

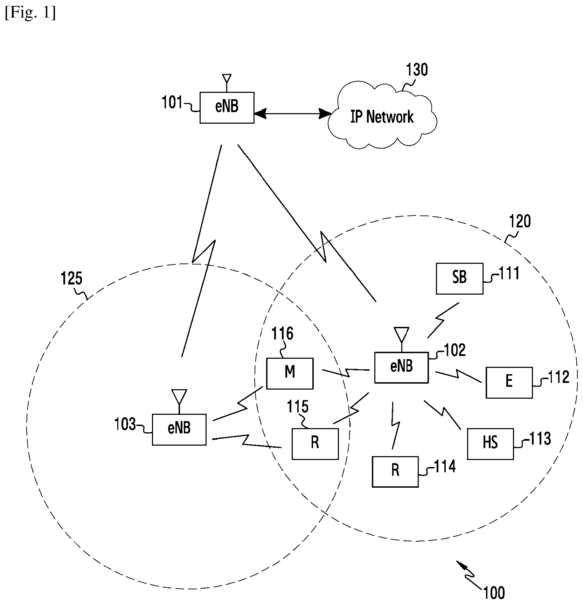

FIGURES 1 through 16, discussed below, and the various embodiments used to describe the principles of the present disclosure in this patent document are by way of illustration only and should not be construed in any way to limit the scope of the disclosure. Those skilled in the art will understand that the principles of this disclosure may be implemented in any suitably arranged device or system.

The following documents and standards descriptions are hereby incorporated into the present disclosure as if fully set forth herein: (i) 3GPP LTE Releases 8/10/11 TSG RAN WG1, http://www.3gpp.org/RAN1-Radio-layer-1 (hereinafter "REF1"); (ii) Van Nee, R., "Breaking the Gigabit-per-second barrier with 802.11AC," Wireless Communications, IEEE, vol. 18, no. 2, pp. 4-7, April 2011 (hereinafter "REF2"); (iii) Perahia, E.; Cordeiro, Carlos; Minyoung Park; Yang, L.L., "IEEE 802.11ad: Defining the Next Generation Multi-Gbps Wi-Fi," CCNC, 2010 7th IEEE, vol., no., pp. 1-5, 9-12 January 2010 (hereinafter "REF3"); (iv) B. Rochwerger et al., "The RESERVOIR Model and Architecture for Open Federated Cloud Computing," IBM Journal of Research and Development, Vol. 53, No. 4. (2009) (hereinafter "REF4"); (v) FIPS-46, "Specification for the Data Encryption Standard (DES)," Federal Information Processing Standards Publication, January 1977 (hereinafter "REF5"); (vi) FIPS-46-3, "Specification for the Data Encryption Standard (DES)," Federal Information Processing Standards Publication, October 1999 (hereinafter "REF6"); (vii) FIPS-197, "Specification for the Advanced Encryption Standard (AES)," Federal Information Processing Standards Publication, November 2001 (hereinafter "REF7"); (viii) R. McEliece, "A public-key cryptosystem based on algebraic coding theory," DSN Progress Report, vol. 42-44, pp. 114-116, 1978 (hereinafter "REF8"); (ix) R G. Gallager, "Low-density parity-check codes," Cambridge. MA: MIT Press, 1963 (hereinafter "REF9"); (x) D. J. C. MacKay, R. M. Neal, "Near Shannon limit performance of low density parity check codes," Electronic Letters, 1996, 32:1645-1646 (hereinafter "REF10"); (xi) E. Boutillon, J. Castura, and F. R. Kschischang, "Decoder-first code design," Proceedings of the 2nd Int'l Symposium on Turbo Codes and Related Topics, pp. 459-462, Brest, France, Sept 2000 (hereinafter "REF11"); (xii) T. Zhang, K. K. Parhi, "VLSI implementation-oriented (3,k)-regular low-density parity-check codes," 2001 IEEE Workshop on Signal Processing Systems, pp. 25-36, Sept 2001 (hereinafter "REF12"); (xiii) Baykas, T.; Chin-Sean Sum; Zhou Lan; Junyi Wang; Rahman, M.A.; Harada, H.; Kato, S., "IEEE 802.15.3c: the first IEEE wireless standard for data rates over 1 Gb/s," Communications Magazine, IEEE, vol. 49, no. 7, pp. 114, 121, July 2011 (hereinafter "REF13"); (xiv) E. Pisek, D. Rajan, J. Cleveland, "Gigabit rate low power LDPC decoder," ITW 2011, pp. 518-522, Oct. 2011 (hereinafter "REF14"); (xv) T. Hwang and T. Rao, "Secret error-correcting codes (secc)," in Proceedings of the 8th annual international Cryptology Conference on Advances in Cryptology, pp. 535-563, 1988 (hereinafter "REF15"); (xvi) D. Gligoroski, S. Knapskog, and S. Andova, "Cryptcoding-encryption and error correction coding in a single step," in Proceedings of International Conference on Security and Management. Citeseer, pp. 1-7, 2006 (hereinafter "REF16"); (xvii) C. Mathur, K. Narayan, and K. Subbalakshmi, "High diffusion cipher: Encryption and error correction in a single cryptographic primitive," in Applied Cryptography and Network Security. Springer, pp. 309-324, 2006 (hereinafter "REF17"); (xviii) C. Mathur, "A mathematical framework for combining error correction and encryption," Ph.D. dissertation, Stevens Institute of Technology, 2007 (hereinafter "REF18"); (xix) H. Cam, "A combined encryption and error correction scheme: Aes-turbo," ISTANBUL University-Journal of Electrical & Electronics Engineering, vol. 9, no. 1, 2012 (hereinafter "REF19"); (xx) O. Adamo and M. Varanasi, "Joint scheme for physical layer error-correction and security," ISRN Communications and Networking, vol. 2011, 2011 (hereinafter "REF20"); (xxi) Q. Chai and G. Gong, "Differential cryptanalysis of two joint encryption and error correction schemes," in Global Telecommunications Conference (GLOBECOM 2011). IEEE, pp. 1-6, 2011 (hereinafter "REF21"); (xxii) C. P. Gupta, S. Gautam, "Joint AES Encryption and LDPC coding," International Journal of Scientific & engineering Research, Volume 4, Issue 7, pp. 603-606, July 2013 (hereinafter "REF22"); (xxiii) J. Daemen and V. Rijmen, "The block cipher rijndael," in Smart Card Research and Applications, Springer, pp. 277-284, 2000 (hereinafter "REF23"); (xxiv) D. J. C. MacKay, "Good error-correcting codes based on very sparse matrices," IEEE Transactions on Information Theory, vol. 45, no. 2, pp. 399-431, 1999 (hereinafter "REF24"); (xxv) G.J. Sullivan; J.-R. Ohm; W.-J. Han; T. Wiegand, "Overview of the High Efficiency Video Coding (HEVC) Standard," IEEE Transactions on Circuits and Systems for Video Technology, Sept 2012 (hereinafter "REF25"); (xxvi) D. A. Huffman, "A method for the construction of minimum redundancy codes," Proc. IRE, 40:1098-1101, 1952 (hereinafter "REF26"); (xxvii) Nandan, S.; Deepthi, P.P.; Stuart, C.M., "Low Complex Crypto Based Channel Coding," Communication Systems and Network Technologies (CSNT), 2012 International Conference on , vol., no., pp. 863-868, 11-13 May 2012 (hereinafter "REF27"); (xxviii) Q. Su, Y, Xiao, "Design of LDPC-based Error Correcting Cipher," International Conference on Wireless, Mobile and Multimedia Networks, pp. 470-474, 2008 (hereinafter "REF28"); (xxix) S. Abu-Surra, E. Pisek, T. Henige, "Gigabit rate achieving low-power LDPC codes: Design and architecture," WCNC 2011, pp. 1994-1999, March 2011 (hereinafter "REF29"); (xxx) C. Paar, J. Pelzl, "Understanding Cryptography," Springer, 2010 (hereinafter "REF30"); (xxxi) L. Ning; L. Kanfeng; L. Wenliang; D. Zhongliang, "A joint encryption and error correction method used in satellite communications," Communications, China , vol. 11, no. 3, pp. 70-79, March 2014 (hereinafter "REF31"); and (xxxii) J. Daemen and V. Rijmen, "New criteria for linear maps in AES-like ciphers," Cryptography and Comm., Springer, Vol. 1, Issue 1, pp. 47-69, April 2009 (hereinafter, "REF32").

Cellular and WiFi/WiGig wireless standards, such as LTE-A, IEEE 802.11ac, and IEEE802.11ad have increased the maximum data rate for transmissions over-the-air to exceed 1 Gbps. (See REF3). This high data rate enables many applications such as Ultra High Definition (UHD) video, high performance interactive gaming, and the cloud computing. Cloud computing in particular increases the computing power, mobile device battery life, and data storage availability beyond the capabilities of the mobile device. Data sent over-the-air or stored in the cloud can be encrypted using different encryption methods such as Advanced Encryption Standard (AES). (See REF7). However, AES is a byte-wise encryption that is vulnerable to different attacks such as square attacks (also referred to as byte-based attacks). That is, the AES encryption method encrypts data in a byte-by-byte manner, which has a granularity of 8-bits per byte. Higher security encryption methods can be applied to the over-the-air transmissions; however, increases in encryption security levels correspondingly increase the encryption/decryption complexity. As data rates increase, using the current encryption methods will significantly increase the power consumption attributable to encryption.

FIGURE 1 illustrates an example wireless network 100 according to this disclosure. The embodiment of the wireless network 100 shown in FIGURE 1 is for illustration only. Other embodiments of the wireless network 100 could be used without departing from the scope of this disclosure.

The wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, the embodiments of the present disclosure implement High Performance Joint Security Advanced Low Density Parity Check (LDPC) Cryptcoding. In certain embodiments, one or more of eNB 101, eNB 102 and eNB 103 is configured to implement High Performance Joint Security Advanced LDPC Cryptcoding.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

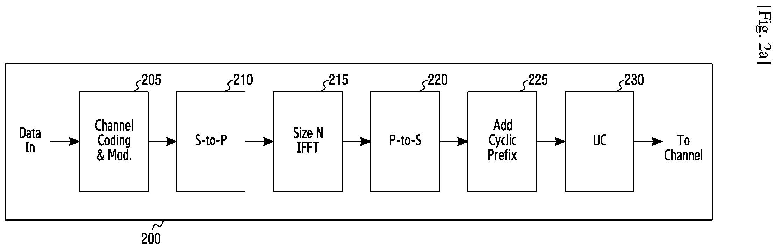

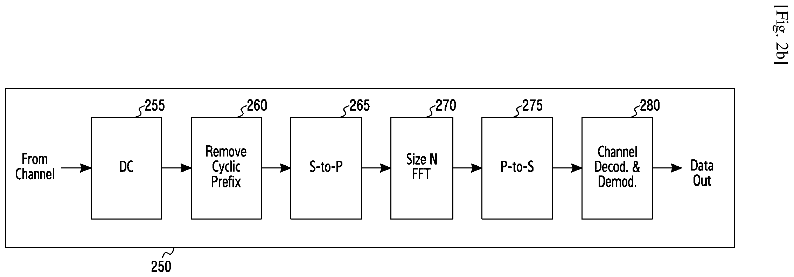

FIGURES 2A and 2B illustrate example wireless transmit and receive paths according to this disclosure. In the following description, a transmit path 200 may be described as being implemented in an eNB (such as eNB 102), while a receive path 250 may be described as being implemented in a UE (such as UE 116). However, it will be understood that the receive path 250 could be implemented in an eNB and that the transmit path 200 could be implemented in a UE. In some embodiments, the transmit path 200 and receive path 250 are configured to implement High Performance Joint Security Advanced LDPC Cryptcoding (JSALC).

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal may also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the eNBs 101-103 may implement a transmit path 200 that is analogous to transmitting in the downlink to UEs 111-116 and may implement a receive path 250 that is analogous to receiving in the uplink from UEs 111-116. Similarly, each of UEs 111-116 may implement a transmit path 200 for transmitting in the uplink to eNBs 101-103 and may implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

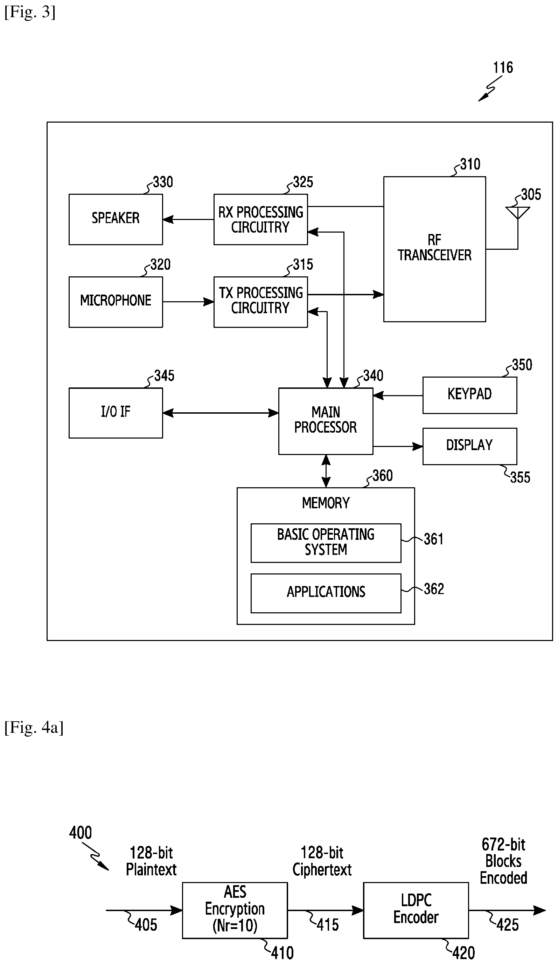

FIGURE 3 illustrates an example UE 116 according to this disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

The UE 116 includes an antenna 305, a radio frequency (RF) transceiver 310, transmit (TX) processing circuitry 315, a microphone 320, and receive (RX) processing circuitry 325. The UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the UE 116. For example, the main processor 340 could control the reception of forward channel signals and the transmission of reverse channel signals by the RF transceiver 310, the RX processing circuitry 325, and the TX processing circuitry 315 in accordance with well-known principles. In some embodiments, the main processor 340 includes at least one microprocessor or microcontroller.

The main processor 340 is also capable of executing other processes and programs resident in the memory 360, such as operations for implementing High Performance Joint Security Advanced LDPC Cryptcoding (JSALC). The main processor 340 can move data into or out of the memory 360 as required by an executing process. In some embodiments, the main processor 340 is configured to execute the applications 362 based on the OS program 361 or in response to signals received from eNBs or an operator. The main processor 340 is also coupled to the I/O interface 345, which provides the UE 116 with the ability to connect to other devices such as laptop computers and handheld computers. The I/O interface 345 is the communication path between these accessories and the main controller 340.

The main processor 340 is also coupled to the keypad 350 and the display unit 355. The operator of the UE 116 can use the keypad 350 to enter data into the UE 116. The display 355 may be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

FIGURE 4A illustrates a device configured to encrypt data and to encode the encrypted data according to the present disclosure. Although certain details will be provided with reference to the components of the encoder 400, it should be understood that other embodiments may include more, less, or different components.

The encoder 400 includes an encryption module 410 and an encoding module 420. In the encoder 400, the encryption module 410 is a separate module from the LDPC encoding module, not integrated with the encoding module 420. The encryption module 410 includes electrical processing circuitry that is configured to implement an AES encryption algorithm. That is, the encryption module 410 receives plaintext 405, such as 128-bit plaintext and generates ciphertext 415 using the plaintext 405. The encryption module 410 includes a number (Nr) of rounds, such as ten rounds. The encryption module 410 outputs the ciphertext 415 to the encoding module 420.

The encoding module 420 includes electrical processing circuitry that configured to implement an LDPC encoding algorithm. That is, the encoding module 420 receives the ciphertext 415 from the encryption module, such as 128-bit ciphertext 415 and generates encoded blocks 425, such as 672-bit encoded blocks. The encoded blocks 425 are an encrypted encoded representation of the plaintext data 405. The encoding module 420 outputs the encoded blocks 425 to a transmission module (not shown) that transmits the encoded blocks 425.

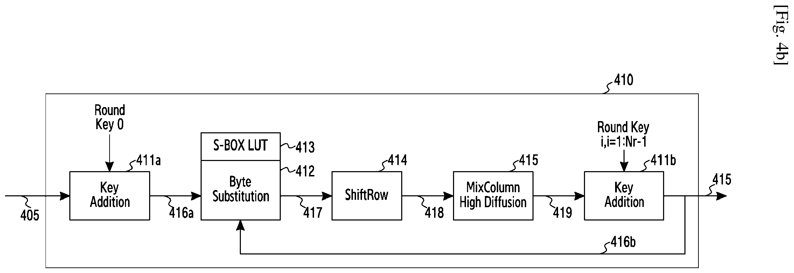

FIGURE 4B illustrates the encryption module 410 of FIGURE 4. Although certain details will be provided with reference to the components of the encryption module 410, it should be understood that other embodiments may include more, less, or different components. For example, the encryption module 410 includes two key addition modules 411a, 411b, a byte substitution block 412, a look up table 413, a ShiftRow block 414, and a MixColumn block 415.

The Advanced Encryption Standard (AES) described in REF7 was officially accepted for commercial use in the early part of the 2000s decade as an enhancement to the Data Encryption Standard (DES). AES supports multiple key lengths such as AES-128, AES-192, and AES-256. According to the AES method, plaintext 405 is arranged in 128 bit blocks and input to a first round of the AES, then, the byte substitution block 412 receives the data 416a after adding the round key 0 to the plaintext data 405. (See REF7). That is, in the AES-128 implementation, the key addition module 411a receives the 128-bit plaintext data 405, and in response, adds the Round Key 0 to the plaintext data 405, wherein the Round Key 0 has a 128-bit length, and then outputs the data 416a to the byte substitution block 412. The byte substitution block 412 replaces each byte with a corresponding byte value based on look-up-table (LUT) of the multiplicative inverse value over $GF(2^8)$. The LUT 413 is referred to as an "S-BOX." The S-BOX 413 enables the byte substitution block 412 to perform a one-to-one non-linear mapping such that for A and B input bytes $S(A+B) \neq S(A) + S(B)$. The byte substitution block 412 outputs data 417 to the ShiftRow block 414 that circularly shifts the 4-bytes rows. Then, the data 418 enters the MixColumn Layer block 415 where the shifted rows data columns are transformed through a matrix multiplication. The matrix multiplication is non-binary in order to provide a high diffusion. The matrix multiplication is implemented over $GF(2^8)$. The first round ends by adding round key 1 to the MixColumn data 419. For example, the next round begins when the key addition block 411b outputs data 416b to the byte substitution block 412 for the next round. The same iterative process is applied for all the first Nr-1 rounds. While in the last round (i.e., round Nr) no MixColumn Layer function is performed. That is, when the Round Key index i=Nr-1, the MixColumn block 415 simply outputs the data 419 identical to the data 418 received, and the key addition module 411b simply outputs the data 415 identical to the data 419 received. In case of AES-128, Nr = 10. In AES-192 embodiments, Nr = 12, and in AES-256 embodiments, Nr = 14.

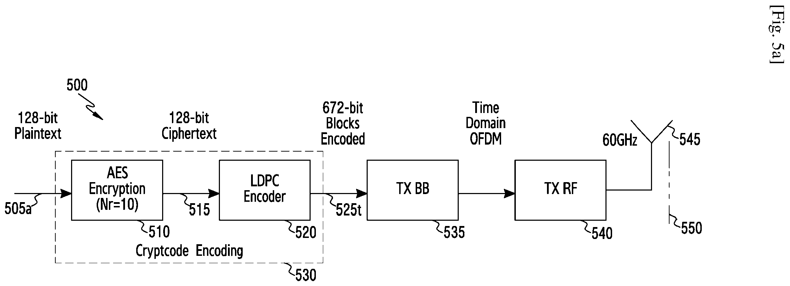

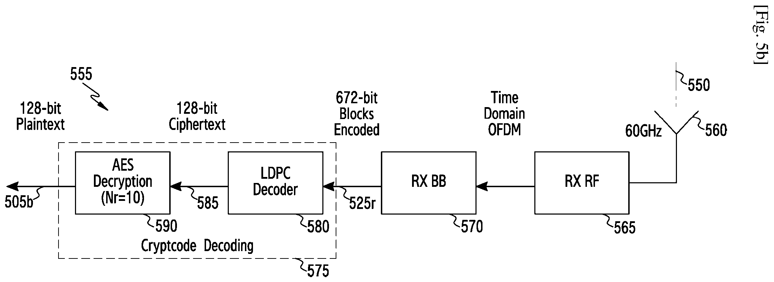

FIGURES 5A and 5B illustrate a communication system in which the encryption process and the channel coding process are processed in the same device according to the present disclosure. FIGURE 5A illustrates a transmission apparatus 500. FIGURE 5B illustrates a reception apparatus 555. Although certain details will be provided with reference to the components of the transmission apparatus 500 and the reception apparatus 555, it should be understood that other embodiments may include more, less, or different components.

Over the past few decades, solutions have been proposed to resolve the ciphering/ deciphering computational complexity with minimum or no compromise to the security aspect. As one example of a proposed solution, REF8 describes cryptcoding, which combines the encryption and channel coding and enables overall lower computing complexity of the encryption and higher data rates while maintaining the security level. The main problem of the cryptcoding methods in REF8 is that the channel code complexity is significantly increased to support the encryption process. Another problem with the cryptcoding methods in REF8 is that the channel code Frame-Error-Rate (FER) performance is compromised in order to accommodate the security. Cryptcoding is feasible when a single device processes both the encryption process and the channel coding process. Specifically, cryptcoding is a procedure in which encryption and error-correction encoding are performed in a single step, additionally, cryptcoding is a procedure in which decryption and error correction decoding are performed in a single step. FIGURES 5A-5B show the proximity of the encryption/ decryption process to the channel coding/decoding process, and this proximity enables cryptcoding.

The transmission apparatus 500 includes an encryption module 510 and an encoding module 520 concatenated together to form a cryptcoding module 530. The transmisson apparatus 500 includes a transmit baseband (Tx BB) module 535, a transmit radio frequency (Tx RF) module 540, and an antenna 545, such as a transmit antenna. Note that components 510 and 520 in FIGURE 5A can operate in the same or similar manner as the corresponding components 410 and 420 in FIGURE 4. In certain embodiments, the Tx BB module 535 includes an Orthogonal Frequency Division Multiplexing (OFDM) baseband processor.

In the cryptcoding module 530, the encryption module 510 is integrated with the encoding module 520. That is, the cryptcoding module 530 includes electrical processing circuitry that is configured to implement an AES encryption algorithm and an LDPC encoding algorithm. That is, the cryptcoding module 530 receives a 128-bit plaintext into the encryption module 510, generates a 128-bit ciphertext 515 using the plaintext 505a according to ten rounds (Nr=10), then generates 672-bit encoded blocks 525t, and outputs the encoded blocks 525t to the Tx BB module 535. The encoded blocks 525t are an encrypted encoded representation of the plaintext data 505a.

Low Density Parity Check (LDPC) codes have an ability to achieve performance close to the Shannon limit. (See REF9). Additionally, the LDPC structure is suitable for fast and efficient parallel decoding. The main drive for reducing the code complexity was the use of Quasi-Cyclic (QC) code that adds structure to the LDPC by grouping consecutive Z bits (also referred to as the "lifting factor") in cyclic shifts form. The parity calculation is performed according to a Lower Triangular (Back Substitution) method in order to facilitate the encoding process. According to the Lower Triangular (Back Substitution) method, the encoder parity bits are obtained based on current and upper row equations. Telecommunication standards, such as the IEEE 802.11ad standard (WiGig) described in REF8, and IEEE 802.15.3c standard, utilize LDPC codes in their physical layer error control scheme.

The Tx RF module 540 is a small electronic circuit that transmits radio waves on one of a number of carrier frequencies (for example, 60 gigahertz (GHz)) using the antenna 545. The Tx RF module 540 is coupled to the antenna 545 to transmit, via the antenna 545, the encoded blocks 525t to the reception apparatus 555 wirelessly through a channel 550, such as an optical communication channel or RF communication channel.

The channel 550 is susceptible to interference based on the environment, and the interference can cause the encoded blocks 525t transmitted by the antenna 545 to be different from the encoded blocks 525r received at the antenna 560 of the reception apparatus 555. That is, interference in the channel 550 causes errors, for example, due to RF spectrum emissions, RF jamming, transmissions from non-network devices, transmissions on overlapping channels, hidden nodes, or channel congestion from too many radios sharing one channel. When the channel 550 is clear, the encoded blocks 525t transmitted by the antenna 545 are the same as the encoded blocks 525r received at the antenna 560, but may be different when the channel has interference (that is, not clear).

The reception apparatus 555 includes a receive antenna 560 that can receive the encoded blocks 25r, a receive RF (Rx RF) module 565, a receive baseband (Rx BB) module 570, and a decryptcoding module 575. That is, the reception apparatus 555 includes an LDPC decoding module 580 and an AES decryption module 590 that are concatenated to form the decryptcoding module 575.

In the decryptcoding module 575, the decryption module 590 is integrated with the decoding module 580. That is, the decryptcoding module 575 includes electrical rocessing circuitry that is configured to implement an AES decryption algorithm and an LDPC decoding algorithm. The decryptcoding module 575 receives 672-bit encoded blocks 525r into the decoding module 580, generates a 128-bit ciphertext 585 using the 672-bit encoded blocks 525r, then generates 128-bit plaintext 505b according to ten rounds (Nr=10), and outputs the 128-bit plaintext 505b. The 128-bit plaintext 505b are a decrypted decoded representation of the plaintext data 505a. Specifically, the 128-bit plaintext 505b is identical to the plaintext data 505a.

As another example of combining cryptography with error-correction, REF8 describes using error correcting codes for encryption, and using a public key cryptosystem by algebraic codes utilizing the same hardware used for error correction for security. All users in the system of REF8 share a set of common security parameters: n, k, t wherein there exist a binary irreducible Goppa code of length $n=2^m$ for each irreducible polynomial of degree t over $GF(2^m)$, wherein the dimension corresponds to a relationship $k \geq n-mt$, and wherein the set of common security parameters are capable of correcting any pattern of t errors or less with rate R=k/n.

As another example of combining cryptography with error-correction, Joint AES-LDPC codes include a private key cryptosystem that combines encryption and error correction into a single primitive.. Like the Rijndael cipher (AES), the Joint AES-LDPC scheme is iterative. The Joint AES-LDPC encryption is composed of seven rounds, wherein the first six rounds are the same as an AES method with 6 rounds, and the LDPC encoder scheme is appended to the end of the seventh round for error correction. Hence, the Joint AES-LDPC scheme encrypts the 128-bit plaintext into 256-bit ciphertext, yielding a rate R=½ LDPC code. In the Joint AES-LDPC schemes, the last 4 AES rounds are replaced with the LDPC encoding. Certain problems of the Joint AES-LDPC schemes are

1) The error correcting LDPC code structure is aligned to the 128-bit AES, however, an ability to use higher LDPC block sizes that can significantly improve the BER performance is needed.

2) LDPC code diffusion is based on the minimum distance of the code, which is much smaller than $k=128=4^{3.5}$ plaintext size.

3) The LDPC code is a linear code and hence is vulnerable to any linear attack from a hacker. That is, the linearity of the LDPC code significantly reduces the security of the code. For a reduced rounds AES-128 cipher, when the number of rounds is Nr=6, the encrypted ciphertext has maximum bit propagation rate of $Rp=4^6$ which is much less secure than the AES-128 standard characterized by $Rp=4^9$ with Nr=10.

The Joint AES-LDPC schemes do not provide adequate security coupled with adequate performance. Particularly, the Joint AES-LDPC scheme requires high complexity due its randomness in order to realize the potential strength of the LDPC code (while combined with AES) to act as a strong cipher that has strong resistance against differential and linear cryptanalysis as well as resistance to square attacks.

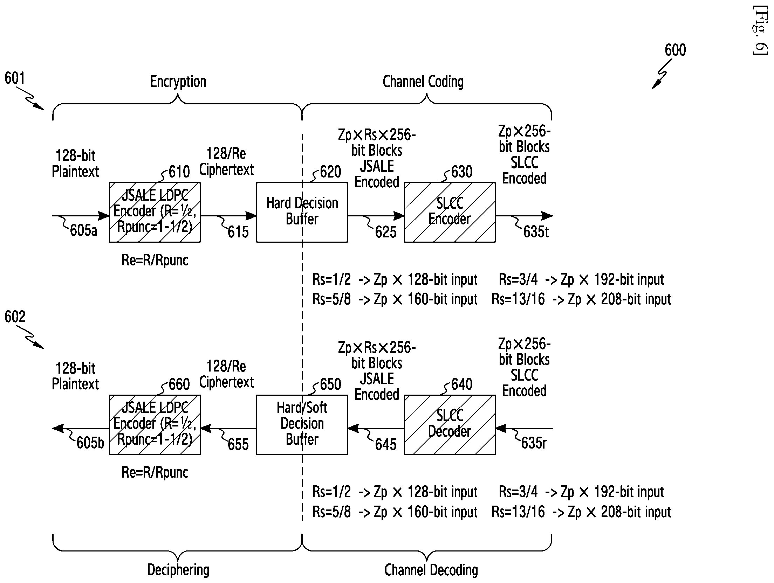

FIGURE 6 illustrates a Joint Security Advanced LDPC Cryptcoding (JSALC) system according to embodiments of the present disclosure. The embodiment of the JSALC system 600 shown in FIGURE 6 is for illustration only. Other embodiments could be used without departing from the scope of the present disclosure. As further described below, in comparison to the above described example of combining cryptography with error-correction, the JSALC systems and methods reduce the overall hardware complexity of the system while increasing the security level and reducing the BER of the codes. Specifically the JSALC systems and methods both provide a security level at least as high as the AES standard encryption method, maintain BER performance of any currently used channel code such as LDPC code, all with reduced complexity compared to the concatenated cryptcoding methods described above.

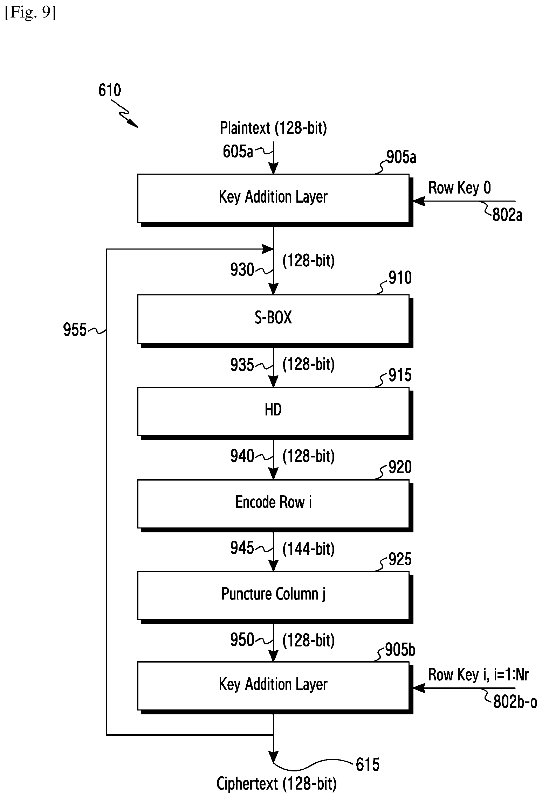

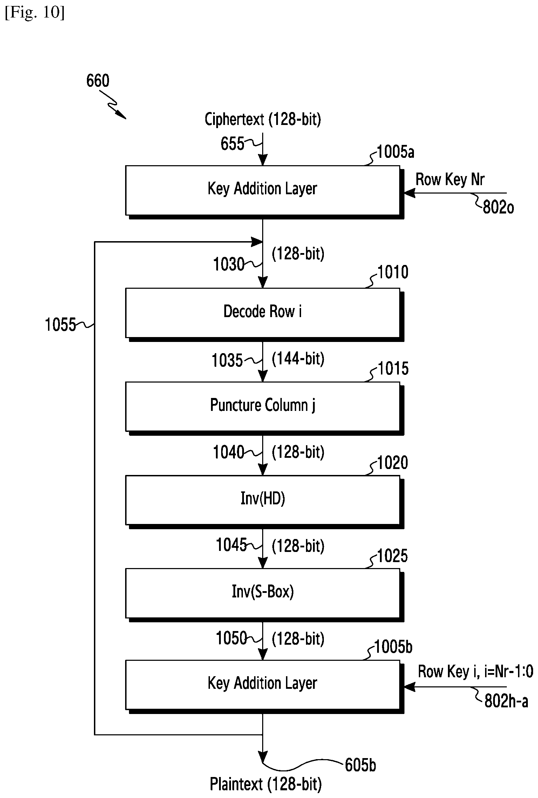

The JSALC system 600 includes a JSALC transmitter 601 and a JSALC receiver 602 that each implement a cryptcoding method called Joint Security Advanced LDPC Cryptcoding (JSALC) based on an LDPC code. JSALC cryptcoding method is composed of two parts: 1) the encryption part called Joint Security Advanced LDPC Encryption (JSALE); and 2) a corresponding channel coding part called Security LDPC Channel Coding (SLCC). That is, the JSALC system 600 includes an Encryption/Deciphering part (namely, the JSALE part) and a Channel Coding/Decoding part (namely, the SLCC part). Accordingly, the transmitter 601 includes a JSALE LDPC encoder 610, a hard decision buffer 620, and a SLCC encoder 630. The receiver 602 includes a SLCC decoder 640, a decision buffer 650, and a JSALE LDPC decoder 660. The hardware implementation of the JSALC transmitter 601 and JSALC receiver 602 reduce complexity and increase hardware reuse by unifying the JSALE and SLCC base H-Matrices. More particularly, the JSALE LDPC encoder/decoder 610, 660 and the SLCC encoder/decoder 630, 640 share the same basic H-Matrix structure, where the difference between the JSALE encoder/decoder and SLCC encoder/decoder is that the SLCC also uses a second level lifting factor Zp that lifts the 256-bit by Zp to create a final Zp×256-bit block. The hardware implementation of the JSALE LDPC encoder 610 and decoder 660 is described in more particular detail below with reference to FIGURES 9 and 10 respectively.

In order to achieve same or higher security than the AES standard, any security system needs to have the following characteristics: a non-linear function to protect from any differential or linear attacks (for example, S-BOX), a key input of 128-bit or above to protect from any chosen plaintext attack, and a low complexity high diffusion of $4^9$ (namely, the diffusion level of the AES standard) or above. The low complexity high diffusion value is a measure of rounds based with a high diffusion (HD) function between rounds. The JSALE LDPC encoder 610 and decoder 660 implement a JSALE encryption/decryption method that incorporates all the above features.

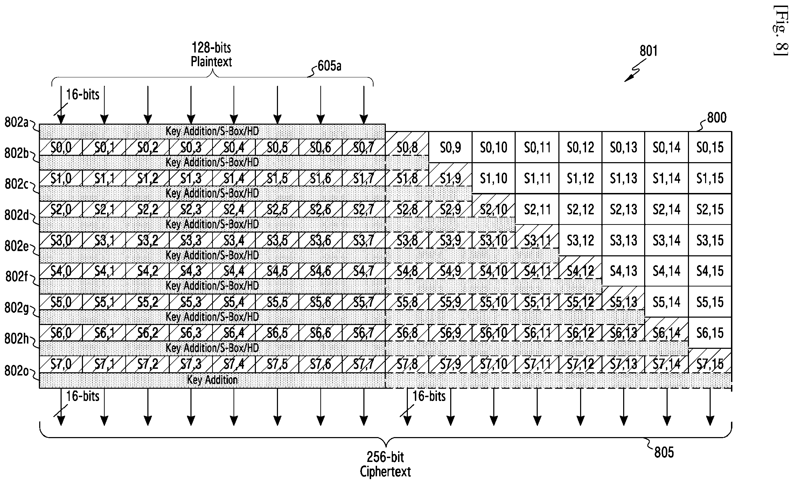

The JSALE LDPC encoder 610 encrypts plaintext using a Quasi-Cyclic (QC) LDPC Layered encoder that encodes the plaintext sequentially. Sequentially means row-by-row from the first row to the last row. JSALE LDPC encoder 610 performs key addition, nonlinear byte substitution, and high diffusion operations between the rows. The JSALE LDPC encoder 610 uses an H-Matrix, which is described in more particular detail below with reference to FIGURE 8. The H-Matrix parity part is a lower triangular to provide low complexity encoding. In certain embodiments, the encoded data is punctured by a puncture rate (Rpunc) to increase the final rate (namely, the effective rate (Re)) to Re=R/(1-Rpunc). Note that $\overline{R_{punc}}$ is defined as the complementary rate of the puncture rate (Rpunc), where $\overline{R_{punc}=1-R_{punc}}$.

As an example, the JSALE LDPC encoder 610 receives a 128-bit plaintext data 605a, cryptcodes the data 605a, and outputs ciphertext 615 to the hard decision buffer 620. The ciphertext 615 has a length expressed as $\frac{128}{Re}$. The hard decision buffer 620 outputs blocks of JSALE encoded data 625, which has a bit length expressed as Zp x Rs x 256. Table 1 summarizes a relationship between the number of bits output by the SLCC encoder 610 based on the SLCC code rate (Rs). The SLCC encoder 630 further encodes the JSALE encoded data 625 and outputs blocks of SLCC encoded data 635t. The blocks of SLCC encoded data 635t have a bit length expressed as Zp x 256 bits. The JSALC transmitter 601 transmits the data 635t to the JSALC receiver 602.

Table 1: Relationship between Rs values and final number of bits outputted from the JSALC transmitter based on a 128-bit plaintext input

| Rs | Zp x Rs x 256 bits |
|---|---|
| 1/2 | 128 |
| 5/8 | 160 |
| 3/4 | 192 |
| 13/16 | 208 |

The JSALE LDPC decoder 660 deciphers ciphertext using a Quasi-Cyclic (QC) LDPC Layered decoder that decodes the ciphertext sequentially in a reverse order. In the case of the decoder 660, sequentially means row-by-row from the last row to the first row. The JSALE LDPC decoder 660 performs key addition, inverse high diffusion, and inverse nonlinear byte substitution operations between the rows. The JSALE LDPC decoder 660 uses the same H-Matrix that the JSALE LDPC encoder 610 uses.

As an example, the JSALC receiver 602 receives the data 635r from the JSALC transmitter 601. When the data 635t is transmitted over a clear channel, the encoded blocks of data 635t are the same as the data 635r received at SLCC decoder 640, but may be different when the channel has interference. The blocks of SLCC encoded data 635t have a bit length expressed as Zp x 256 bits. The SLCC decoder 640 decodes the JSALE encoded data 635r and outputs blocks of JSALE encoded data 645, which have a bit length expressed as Zp x Rs x 256. The decision buffer 650 receives the blocks of JSALE encoded data 645 from the SLCC decoder 640. The relationships in Table 1 also apply to the SLCC decoder 640. The decision buffer 650 outputs ciphertext 655 to the JSALE LDPC decoder 660. In certain embodiments, the decision buffer 650 is a soft decision buffer that generates a multi-bit precision LLR input to the JSALE LDPC decoder 660. In certain embodiments, the decision buffer 650 is a hard decision buffer that generates a single-bit precision LLR input to the JSALE LDPC decoder 660. Based on whether the LLR input has a single-bit precision or a multi-bit precision, the JSALE decryption processing can be hard or soft, respectively. The ciphertext 655 has a length expressed as 128/Re. The JSALE LDPC decoder 660 cryptcodes the ciphertext 655 to recover and output a 128-bit plaintext data 605b. The 128-bit plaintext 605b is a decrypted decoded representation of the plaintext data 605a such that the plaintext 605b is identical to the plaintext data 605a.

In certain embodiments, the transmitter 601 decreases the number of bits of ciphertext 615 transmitted to the receiver 602 by puncturing the H-Matrix at a puncturing rate (Rpunc) to increase the final, transmitted code rate (Re) to Re=R/(1-Rpunc). That is, the transmitter 601 punctures the H-matrix according to a puncturing pattern that is common with receiver 602. In order to decrease the bit length of the ciphertext 615, the receiver 602 shares the common puncture pattern and common H-Matrix cyclic shift values with the transmitter 601. Accordingly, the receiver 602 can decode the data using one of the Belief Propagation (BP) iterative decoding methods. Also, the receiver 602 can decrypt/decode the data 635r in reverse order from last row back to the first row in each iteration. In addition, because the puncturing pattern can also be a key, by slightly decreasing the transmitted code rate to Re=dR/(1-Rpunc), The transmitter 601 can transmit dummy sets of bits over the channel, where $d \rightarrow 1$ is the dummy rate, to the receiver 602. The receiver 602 punctures the dummy bits because the common puncture patter enables the receiver 602 to know the location of the dummy bits and correctly ecrypt/decode the data. Note that different puncturing patterns can be applied to provide high code rate. However, the higher the code rate the higher the number of iterations the JSALE LDPC decoder 660 will have to perform in order to correctly decode the data. Increasing the decoder number of iterations linearly increases the total decryption complexity. At the same time, increasing the iteration number of the LDPC decoder also linearly increases the cryptanalysis complexity. In addition, Maximum-Likelihood (ML) decoding of the JSALE LDPC is highly complex $O(2^{128})$, hence any brute force ML cryptanalysis is impractical.

Unlike other cryptcoding methods, the JSALE encryption part of the JSALC system 600 does not replace the channel coding of the wireless system. The JSALE is part of the encryption layer working together with the wireless system channel coder (SLCC) that is tailored to the specific wireless channel characteristics. As a result, the JSALE method has a four times higher level of security than conventional AES-128 systems all while the JSALE method provides either no or minimum impact ($\leq$20%) on the overall data rate. The amount of impact that the JSALE method has on the overall data rate depends on the error resilience requirements of the JSALE. In addition, the Security LDPC Channel Code (SLCC) FER/BER performance fits communications standards with $E_b/N_0 <$ 2 dB at Frame Error Rate (FER) equal to $10^{-2}$ with only a 1 decibel (dB) gap from the random coding bound (RCB). As a technical advantage, the JSALC system 600 reuses the LDPC encoder/decoder hardware resources for both JSALE and SLCC parts, thereby causing the JSALC system hardware consume an overall smaller area and to consume less power than other AES/LDPC concatenated systems such as, the cryptcoding module 530, decryptcoding module 575 of FIGURES 5A and 5B. In sum, the JSALC system is a higher security encryption method than other cryptcoding systems and maintains an acceptable the channel code BER/FER performance.

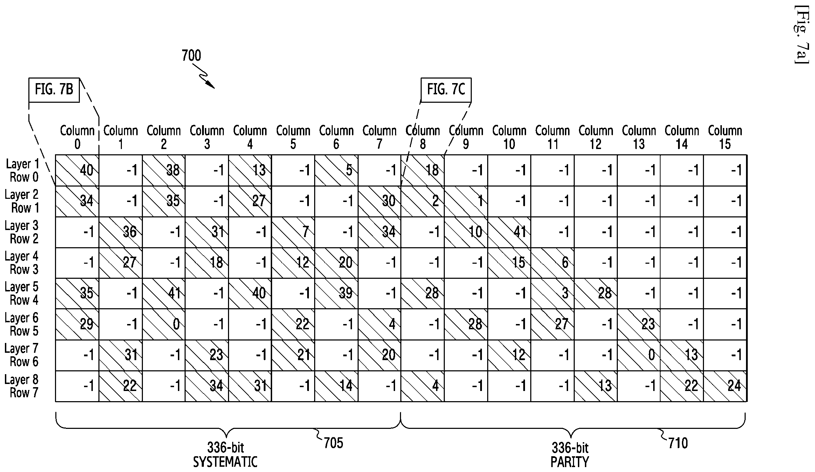

FIGURE 7A illustrates a parity check H-matrix associated with a JSALC encoding scheme according to embodiments of the present disclosure. For example, the JSALE LDPC encoder 610 and decoder 660 can use the H-matrix 700 to perform crypcoding functions. The embodiment of the H-matrix 700 shown in FIGURE 7A is for illustration only. Other embodiments could be used without departing from the scope of the present disclosure.

The H-matrix 700 is a ½ code rate H-matrix conforming to the WiGig standard, which is based on the WiGig OFDM size of 336 subcarriers per symbol (dual bits for QPSK). Also, the ½ code rate H-matrix 700 is a 672x336 matrix that represents a transmission of 672 bits per frame (bpf). Specifically, the H-matrix 700 has 672 bits per row and 336 bits per column, accordingly each frame transmission is a row from the H-matrix 700. In other embodiments, the H-matrix can have any suitable rate, such as a ⅝, ¾, or a 13/16 code rate (R). Rows (1,3), (2,4) (5,7), and (6,8) are mutually exclusive row pairs that make the LDPC Rate ½ 4-Layer decodable. REF 14 describes in further detail about LDPC codes and decoder architectures and the corresponding implementation complexity.

Additionally, the H-matrix 700 shown has a block size (N) of 672 bits with a lifting factor (Z) of 42. Other embodiments of H-matrices for use with the present disclosure can have other block sizes and lifting factors. The lifting factor indicates the number Z of consecutive bits grouped in cyclic shift form. That is, a lifting factor of Z=42 indicates that the block code is grouped in 42 bits such that the block size (N=672) forms N/Z=672/42=16 Z-group of bits. Each of the Z-group of bits forms a column such that the H-matrix 700 includes 16 columns. The first eight columns 705 represent systematic (or data) bits while the second eight columns 710 represent parity bits (or redundancy bits). As such, using the H-matrix 700, each frame transmission includes 336 systematic bits and 336 parity bits. The Z lifting factor defines the number of bits per matrix in the cyclic shift form. As a result, each of the 16 columns of the H-matrix 700 includes a number of identity matrices of size ZxZ bits, wherein each identity matrix forms a row of the H-matrix 700. The number of rows in the H-matrix 700 can be expressed as $\frac{\text{Number of bits per column}}{Z} = \frac{336}{42} = 8$ rows or expressed as R x Number of Columns =1/2 x 16 =8 rows. Each row in the H-matrix 700 forms a layer. The eight rows are indexed or numbered sequentially from 0 through 7, and the eight layers are indexed from 1 through 8.

Each number represents a submatrix that is the cyclic shifts of the identity matrix of size ZxZ bits. A '-1' value represents a zero matrix. Accordingly, the '-1' value indicates that the location is not used in the calculation. The remaining values (namely, those having values other than '-1') are location values that represent a submatrix.

For example, in the first row (Row 0), the first column (Column 0) shows the number 40, which means that the first 42 bits are cyclically right shifted by 40 bits in the first 42 parity equations and so on for the reminder of the bits.

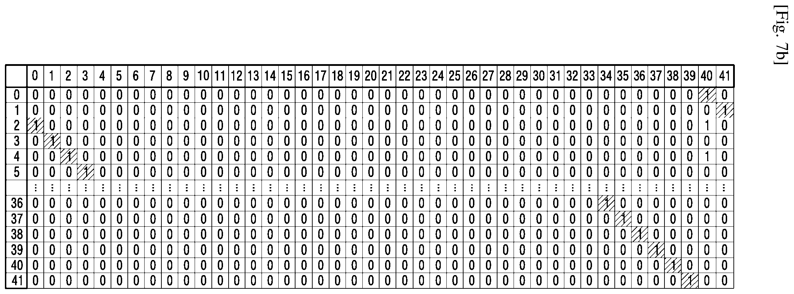

FIGURE 7B illustrates the submatrix represented by the number 40, wherein the center thirty rows are hidden from view. Specifically, in the submatrix the represented by the number 40, rows are indexed from 0 through 41, the columns are indexed from 0 through 41, and the first row includes all zeros except for in the column having a column index 40 includes a bit value of "1." Also in the submatrix the represented by the number 40, the second row (Row 1), includes all zeros except for in the last column having a column index 41 includes a bit value of "1." Also in the submatrix the represented by the number 40, the third row (Row 2), includes all zeros except for in the first column having a column index 0 includes a bit value of "1." This pattern continues for the remaining rows of the submatrix such that the last row (Row 41), includes all zeros except for in the 40th column having a column index 39 includes a bit value of "1."

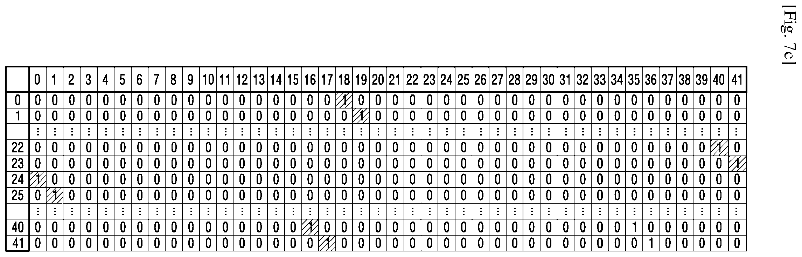

As another example, FIGURE 7C illustrates the submatrix represented by the number 18, wherein various rows are hidden from view. In the H-Matrix 700, the submatrix disposed in the first layer at the first column of parity bits (namely, Column 8) is represented by the number 18. In the first layer of the parity part 710 of the H-Matrix 700, all columns except the first column includes a zero submatrix. The submatrix represented by the number 18 includes parity bits generated from applying an XOR function to the first layer of systematic bits. Specifically, XOR (40, 38, 13, 5) generates the bitvalue of the Column 18 of the first row of the submatrix represented by the number 18. XOR (41, 39, 14, 6) generates the bitvalue of the Column 19 of the first row of the submatrix represented by the number 18. This process of applying the XOR function to the systematic bits 705 of each of the Z rows within Layer 1 repeats until the next layer is processed.

The subsequent layer, Layer 2, generates a first submatrix in the same column that the previous layer, Layer 1 generated a submatrix. In Layer 2, the submatrix represented by the number 2 includes parity bits generated from applying an XOR function both to the second layer of systematic bits 705 and to the previous layer parity bits. Specifically, XOR (34, 35, 27, 30, 18) generates the bitvalue of the Column 2 of the first row of the submatrix represented by the number 2. After the bitvalues have been generated for the entirety of the submatrix represented by the number 2, Layer 2 generates a second submatrix in the next column of Layer 2 by using the submatrix represented by the number 2. Specifically, in Layer 2, XOR (34, 35, 27, 30, 2) generates the bitvalue of the column 1 of the first row of the submatrix represented by the number 1. This process of generating a first submatrix of parity bits in the same column as the previous layer of parity bits and then generating a second submatrix of parity bits in the next column using a previous column of the same layer repeats until all layers have been processed.

FIGURE 8 illustrates a LDPC H-Matrix 800 for the JSALE encryption process 801 implemented by a JSALE LDPC encoder/decoder 610, 660 having a puncturing rate that is less than the basic code rate (1/2) according to embodiments of the present disclosure. The embodiment of the JSALE process 801 shown in FIGURE 8 is for illustration only. Other embodiments could be used without departing from the scope of the present disclosure.

The H-matrix 800 can be the same as or similar to the H-matrix 700 of FIGURE 7A. Each submatrix of the H-matrix 800 is labeled "Si,j" according to a corresponding row index (i) and column index (j), wherein the row indices and column indices are each a respective set of integers from 0 to 15. For example, in the first row (Row 0) of the H-matrix 800, the first column (Column 0) is labeled "S0,0" and can represent the submatrix "40" in Layer 1 of the H-matrix 700. Likewise, the submatrices "S0,8" "S1,8" "S1,9" and S2,10" can represent the submatrices "18" in Layer 1 of the H-matrix 700, "2" in Layer 2 of the H-matrix 700, "1" in Layer 2 of the H-matrix 700, and "41" in Layer 3 of the H-matrix 700, respectively. The QC-LDPC block size is derived from a 256-bit LDPC block H-Matrix that has a rate R=1/2, a lifting factor Z=16, 16 columns, and 8 rows, wherein the number of columns is expressed as

$$\frac{\text{Number of bits}}{\text{Lifting Factor}} = \frac{256}{16} = 16 \quad,$$

and wherein the number of rows is expressed as Number of Columns x R = 16 x 1/2 =8.

JSALE LDPC encoder 610 receives the 128-bit plaintext 605a through multiple input terminals, such as an input terminal for each column of systematic bits, wherein each input terminal receives 16-bits of data in parallel. To generate the first layer of the H-matrix 800, the JSALE LDPC encoder 610 performs key addition using the first key 802a, then nonlinear byte substitution (S-Box), and then high diffusion (HD) operations using the 128-bit plaintext 605a. Next, the JSALE LDPC encoder 610 generates the parity bits for the submatrix "S0,8." That is, after the JSALC transmitter 601 encrypts the plaintext 605a applying the JSALE method to {"S0,0" ... "S0,7"}, then the SLCC encoder 630 channel codes Layer 1 by appending the parity portion of Layer 1 using the SLCC method.

To generate each subsequent layer of the H-matrix 800, the JSALE LDPC encoder 610 performs key addition using an incrementally larger key 802b-o for each round, an S-Box operation, and HD operations between the rows. That is, to generate row i of the H-matrix 800, the JSALE LDPC encoder 610 performs key addition by applying the $i^{th}$ key 802b-o to the previous row data {"Si-1,0" ... "Si-1,7+i"}, where i is the index for the current round (row). Specifically, to generate the second layer of the H-matrix 800, the JSALE LDPC encoder 610 performs key addition applying a second key 802b (Row 1 key) to the Row 0 data {"S0,0" ... "S0,8"}, where i=1 for the second layer. The second key 802b is longer than the first key 802 by a number of bits. After each key addition step 802b-o, the previous row data {"Si-1,0" ... "Si-1,7+i"} is fed to the non-linear S-Box function. Then, the previous row data {"Si-1,0" ... "Si-1,7+i"} enters the High Diffusion (HD) function block which guarantees the 4-bit diffusion. Then, SLCC encoder 630 channel codes the current round data {"Si,0" ... "Si,7+i"}. The iterative process continues through all the Nr=8 rounds (rows). At this point, the JSALC transmitter 601 transmits the 256-bit ciphertext 805 to the JSALC receiver 602. These 256 bits of ciphertext 805 are sent as secret key using secured key exchange. The same key is used as a seed for the 256-bit scrambler or to XOR the 256-bit encoded ciphertext 805 output. In the embodiments wherein transmitter 601 transmits the 256-bit ciphertext 805, the output data 615 from the JSALE LDPC encoder 610 is the 256 bits of ciphertext 805. In other embodiments wherein the transmitter 601 transmits less than all of 256-bit ciphertext 805, the output data 615 is not identical to the 256-bit encoded ciphertext 805 because the 256 bits of ciphertext 805 generated by the JSALE LDPC encoder 610 are punctured before being outputted from the JSALE LDPC encoder 610 as the output data 615. In certain embodiments, 16x8x4 bits (0000 indicates disable)=512 bits out of them only max of (8x8x4) 256 bits are all nonzero (lower triangular and Wr=8).

In certain embodiments, the size of the encryption key is constant such as 128 bits, for example, for layers subsequent to the first layer the systematic data {"Si-1,0" ... "Si-1,7"} from the previous layer is punctured at a puncture rate Rpunc such that keys 802b-o are added to a same number of columns (i.e., 128 bits) per row. The first key 802a has 128-bit key length for the first round (Round i=0).

The JSALE encryption QC-LDPC H-Matrix cyclic-shift values can be kept secret or otherwise secure from devices not intended to receive the JSALC cyrptcoded data, as well, as the puncturing pattern can be kept secret. The encryption key is transferred between the transmitter 601 and receiver 602 over a secure channel. The size of the encryption key varies between 128 bits to 256 bits, for example, for layers subsequent to the first layer an increasing key size is also added to the parity part of the H-Matrix, and the key length increases incrementally per row. The first key 802a has 128-bit key length for the first round (Round i=0).

FIGURE 9 illustrates a flowchart of the hardware implementation of the JSALE LDPC encoder 610 for according to the embodiments of the present disclosure. The embodiment of the encoder 610 shown in FIGURE 9 is for illustration only. Other embodiments could be used without departing from the scope of the present disclosure.

The JSALE encryption/decryption flowcharts in FIGURES 9 and 10 show respective encryption/encoding and decryption/decoding examples for the case of Rpunc=1/2(Re=1), Nr=8. In each LDPC encoding row 1≤i≤8, the encoded data is appended by a new parity column. The encoded data is then punctured by column 1≤j≤8 before the next key addition, yielding a maintaining of the entire process as 128-bit based. In the case of Rpunc=1/2(i.e., Re=1), the JSALE decryption/decoding hardware processes in a backward order of the encryption from last row to first row. The decryption/decoding can be processed as hard decision. The advantage of Rpunc=1/2(Re=1) JSALE encryption is that the decryption requires only a single LDPC decoding iteration to recover the plaintext. The disadvantage of processing at rate Rpunc=1/2(Re=1) is that it has no error resilience. However, in certain implementations, such as transmissions over a clear channel, the foregone error resilience is not a disadvantage, especially in light of the technical advantages of the high effective rate (Re=1).

The JSALE LDPC encoder 610 implements the JSALE encryption process 801 described above in reference to FIGURE 8. The JSALE LDPC encoder 610 includes key addition layer processing block 905a, 905b, an S-Box 910 processing block, an HD processing block 915, an encoding block 920, and a column puncture processing block 925. For simplicity, according to the embodiments of the present disclosure, the byte substitution block and S-Box LUT are together referred to as the "S-BOX." Note that the components 905a, 905b, and 910 can be the same as or similar to the respective components 411a, 411b, and 412 of the AES standard encryption block of FIGURE 4.

In the first round, the row key index (i) is set to zero. The key addition layer 905a receives the 128-bit plaintext 605a, adds the first key 802a (Row Key 0) to the plaintext 605a by applying an XOR function to the plaintext 605a and the key 802a, and outputs 128-bits of data 930. For example, the data 930 can be similar to the data 416a output from the key addition module 411a of the standard AES 410 shown in FIGURE 4. In response to receiving the 128-bits of data 930, the S-BOX 910 outputs a non-linearly corresponding 128-bit data 935 from the S-BOX LUT. For example, the S-BOX LUT associated with the S-BOX 910 can be similar to the LUT 413 shown in FIGURE 4, also, the 128-bit data 935 can be similar to the data 417 output from the byte substitution block 412 of the standard AES 410. In response to receiving the 128-bit data 935, the HD block 915 applies a low complexity high diffusion function having an HD value of $4^9$ or above that mixes the columns according to a column permutation, and outputs a 128-bit data 940. For this first round, the 128-bit data 940 represents the systematic part of Layer 1 of the H-matrix 800, namely, {S0,0 .. S0,7}. In response to receiving the to the 128-bit data 940, the encoder 920 generates 16 parity bits (i.e., the submatrix S0,8) based on the 128-bits of data 940 and the H-matrix 700, concatenates the newly generated parity submatrix S0,8 to the 128-bit data 940, and outputs the 144-bit data 945.

In embodiments of the encoder 610 without a column puncture block 925, the 144-bit data 945 is the output of the first round, namely, {S0,0 .. S0,8} . The next round (i.e., the second round) begins at key addition layer 905b that receives the 144-bit cryptcoded data 945, increments the row key index by one (i.e., i++), adds the next key 802b (Row Key i) to the cryptcoded data 945, and outputs 144-bits of data 955 to the S-BOX 910 for processing the second round of cryptcoding. That is, in embodiments of the encoder 610 without a puncture block 925, the encoder 610 generates two bits ciphertext 805 for every bit of plaintext data 605a received, which corresponds to an effective code rate of Re=¼ because the SLCC encoder 630 generates two-bits of encoded blocks 635t for every bit in the ciphertext 615. When the encoder 610 does not puncture, the complementary puncture rate ($\overline{R_{punc}}$) is less than the basic code rate (R) of the H-matrix, yielding a non-puncture effective code rate (Re) that is less than the basic code rate (Re<R).

In certain embodiments of the encoder 610 with the column puncture block 925, output of the first round is the data 950 that is output from the column puncture block 925. The column puncture block 925 enables the transmitter 601 to adjust the effective code rate (Re) within a range of (1 ≥Re≥½) based on the puncture rate (Rpunc). That is, the encoder 610 generates two bits ciphertext 805 for every bit of plaintext data 605a received according to the H-matrix 700 basic code rate (R=1/2) (i.e., R is distinguished from the final effective code rate Re). The column puncture block 925 punctures or otherwise removes a subset or portion of bits from the encrypted data 945, thereby preventing the SLCC encoder 630 from receiving the subset of bits punctured out of the 256-bit ciphertext 805a. The SLCC encoder 630 generates 1/Rs bits (i.e., 2-bits for Rs=1/2) of encoded blocks 635t for every bit in the punctured, reduced length ciphertext 615. As the punctured ciphertext 615 has a bit length that is less than 256-bits, the encoded blocks 635t includes a number of bits within the range of [256 > (Zp x Rs x 256) ≥ 128]. In the first round, the column puncture block 925 receives the output data 945, sets the column index (j) to zero, punctures Column j, and outputs punctured data 950. The punctured data 950 has a bit length of (Rpunc x 128) of bits, for example, when Rpunc=8/9, the data 950 has a bit length of 128-bits. The column puncture block 925 of the encoder 610 implements a complementary puncture rate ($\overline{R}_{punc}$) that is greater than or equal to the basic code rate (R) of the H-matrix and less than one (R≤$\overline{R}_{punc}$<1), as a result, yielding a partial-puncture effective code rate greater than a basic code rate and less than one (R≤Re<1).

In certain embodiments of the encoder 610 with the column puncture block 925, the next round (i.e., the second round) begins at key addition layer 905b. For processing rounds subsequent to the first round, the key addition layer 905b receives the (Rpunc x 128) bits of punctured 128-bit data 950, increments the row key index by one (i.e., i++), adds the next key 802b (Row Key i) to the 128-bit data 950, and outputs 128 bits of data 955 to the S-BOX 910 for processing the second round of cryptcoding. That is, in embodiments of the encoder 610 including the puncture block 925, the encoder 610 generates less than two bits of ciphertext 805 for every bit of plaintext data 605a received, which corresponds to an effective code rate in the range of 1≥Re>½ because the SLCC encoder 630 generates 1/Rs bits of encoded blocks 635t for every bit in the ciphertext 615.

The column puncture block 925 stores the puncture pattern that is common the decoder 660. Various puncture patterns can be used as along as both the transmitter 601 and receiver 602 use the same puncture pattern for the same plaintext data 605a.

The HD 915 function is flexible and can be calculated through simple linear binary operations simpler than the MixColumn function in AES. (See REF7). In certain embodiments, the HD 915 can apply a non-binary operation. In the HD 915 function, the natural diffusion of the 256-bit LDPC derived from the minimum distance of the code is added to the overall diffusion calculation of the JSALE. The natural diffusion of the 256-bit LDPC can be designed to $d_{min} \geq 16=4^2$. Hence, the overall JSALE diffusion for 8 rows is $R_p=4^8 4^2=4^{10}$ which is four times higher than AES-128 diffusion of $4^9$. As a result of using the JSALE method, the security level of the encryption increased to be even higher than AES-128 with $R_p=4^{10}$. The Quasi-Cyclic LDPC row encoding process replaces the ShiftRow block 414 of the AES 410.

FIGURE 10 illustrates a flowchart of the hardware implementation of the of the JSALE LDPC decoder 660 according to the embodiments of the present disclosure. The embodiment of the encoder 610 shown in FIGURE 9 is for illustration only. Other embodiments could be used without departing from the scope of the present disclosure.

The JSALE LDPC decoder 660 includes two key addition layers 1005a, 1005b, a decoder block 1010, a column puncture block 1015, an inverse HD block 1020, and an inverse S-Box 1025. The JSALE LDPC decoder 660 deciphers the 128-bit ciphertext 655 using a Quasi-Cyclic (QC) LDPC Layered decoder that decodes the ciphertext 655 sequentially. The JSALE LDPC decoder 660 performs key addition layer 1005a, inverse high diffusion1020, and inverse nonlinear byte substitution operations 1025 between the rows. The JSALE LDPC decoder 660 uses the same H-Matrix that the JSALE LDPC encoder 610 uses. The JSALE LDPC decoder 660 supports multiple key lengths such as AES-128, AES-192, and AES-256.

More particularly, the decoder 660 receives the 128-bit ciphertext 655 for a first round (Round Nr) at the key addition layer 1005a, which applies the Row Key Nr to the ciphertext 655 using a function such as an inverse XOR function to recover the parity bits of the last layer the H-matrix 800 which are output to the decoder block 1010 as 128-bit data 1030.

The JSALE decoder 660 receives a soft decision Log Likelihood Ratio (LLR) data 655 from the SLCC decoder 640 output for error correction. The soft decision LLR input inputs to the JSALE decoder 660 has a multi-bit precision, and the soft input decryption process yield an effective code rate the is less than 1 (Re<1). Also, adding errors in the transmitter side that will be punctured in the receiver. Hence, all punctured bits are set to all "0" (neutral value) while the key addition layer 1005a-b, inverse S-Box 1025, and the inverse HD linear function 1020 are processed on the soft data 655. The LLR of the inverse S-Box 1025 decryption ($S^{-1}$) input bits with $i \in [0,...,7]$ can be expressed by Equation 1.

$$L_{b_i} = \ln\left(\frac{p(b_i=+1|y_i)}{p(b_i=-1|y_i)}\right) = \ln\left(\frac{p(y_i|b_i=+1)}{p(y_i|b_i=-1)}\right) + \ln\left(\frac{p(b_i=+1)}{p(b_i=-1)}\right) \qquad (1)$$

In Equation 1, the output bits $L_{q_j}$ from the inverse S-box 1025 are express by Equation 2 wherein S is invertible such that $k=S(S_k^{-1})$ and $j \in [0,...,7]$, and $K=256$, and $b_i$, $q_j$ have equi-probability for -1, and +1.

$$L_{q_j} = \ln\left(\frac{p(y_{0...7}|q_j=+1)}{p(y_{0...7}|q_j=-1)}\right) = ln\left(\frac{\sum_{k=0}^{K=1} p(y_{0...7}|S_k^{-1}|q_j=+1)}{\sum_{k=0}^{K-1} p(y_{0...7}|S_k^{-1}|q_j=-1)}\right)$$

$$= \ln\left(\frac{\sum_{k=0}^{K-1}\prod_{i=0}^{7} p(y_i|S_k^{-1}|q_j=+1)}{\sum_{k=0}^{K-1}\prod_{i=0}^{7} p(y_i|S_k^{-1}|q_j=-1)}\right) = \ln\left(\frac{\sum_{k=0}^{K-1}\prod_{i=0}^{7} p(y_i|b_{0...7,k}|q_j=+1)}{\sum_{k=0}^{K-1}\prod_{i=0}^{7} p(y_i|b_{0...7,k}|q_j=-1)}\right)$$

$$= \ln\left(\frac{\sum_{k=0}^{K-1} e^{L(b_{0...7,k})}|q_j=+1}{\sum_{k=0}^{K-1} e^{L(b_{0...7,k})}|q_j=-1}\right) = \ln\left(\frac{\sum_{k=0}^{K-1} e^{\sum_{i=0}^{7} L(b_{i,k})}|q_j=+1}{\sum_{k=0}^{K-1} e^{\sum_{i=0}^{7} L(b_{i,k})}|q_j=-1}\right)$$

$$= \max_k^*\left(\sum_{i=0}^{7} L(b_{i,k})\Big|q_j=+1\right) - \max_k^*\left(\sum_{i=0}^{7} L(b_{i,k})\Big|q_j=-1\right) \quad (2)$$

In Equation 2, $L(b_{i,k})=L_{b_i}[S(k)]_i$ and $\max_k^*(x(k)) = \max_k(x(k)) + \ln\left(1 + \sum_{k\backslash m} e^{x(k)-x(m)}\right)$, $m$
= $\text{argmax}_k(x(k))$, and $k \in \{0,...,255\}$.

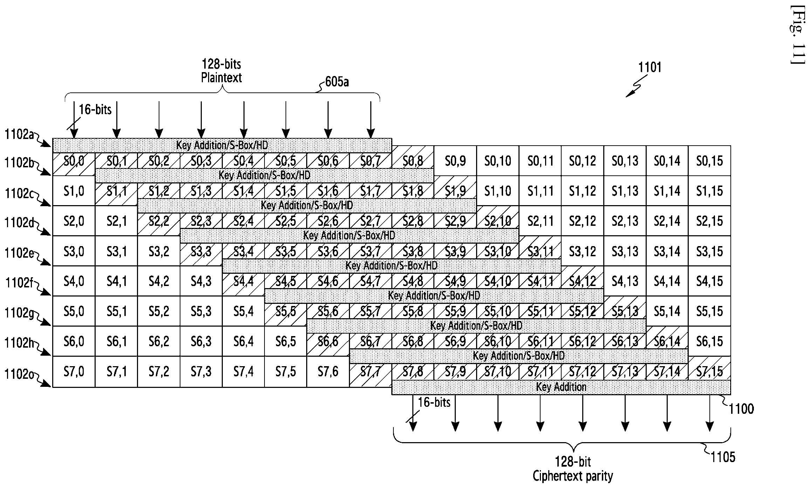

FIGURE 11 illustrates an LDPC H-Matrix 1100 for the JSALE encryption process 1101 implemented by a JSALE LDPC encoder/decoder 610, 660 having a puncturing rate that is equal to the basic code rate (1/2) according to embodiments of the present disclosure. The embodiment of the JSALE process 1101 shown in FIGURE 11 is for illustration only. Other embodiments could be used without departing from the scope of the present disclosure. The LDPC H-Matrix 1100 is similar to the H-Matrix 800 and can be based on the H-matrix 700 of FIGURE 7A.

The JSALE process 1101 is special case in which the puncture rate is Rpunc=1/2 which corresponds to no rate reduction and a final effective code rate of (Re=1). JSALE process 1101 punctures the data in every row of encoding and maintains the encoded size 128-bit throughout the encryption process. The JSALE process 1101 implementing a complementary puncture rate ($\overline{R_{punc}}$) that is equal to a basic code rate of the H-matrix yields a full puncture effective code rate equal to one (Re=1). For example, when Rpunc=1/2, then also $\overline{R_{punc}}$ = 1/2 and Re=1.

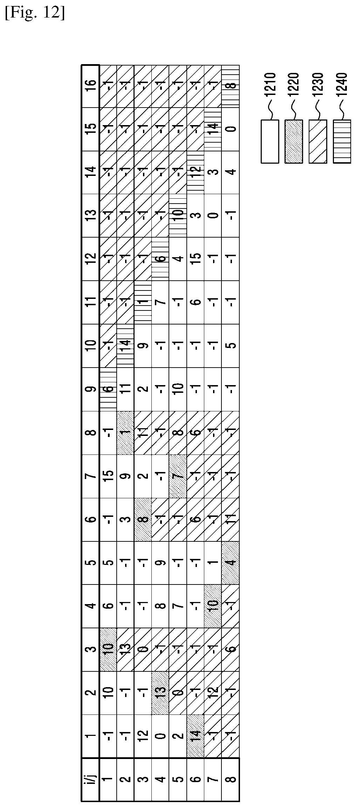

FIGURE 12 illustrates an example of the JSALE Encryption/Decryption H-Matrix in the case of (Re=1). The block 1230 entries are excluded from the encoding process. The encryption process starts at row i=1. After the encoder applies key addition, S-Box and HD operations to the systematic data (columns 1-8) of row i=1, the result generated is parity column 9 (block 1240). Then, according to a non-sequential puncture pattern, at the end of the first round, column j=3 is punctured for the rest of the process.

The next round of encoding begins when the non "-1" entries of data for row i=2 are processed through the key addition, S-Box and HD operations. The row i=2 encoding data (in columns 1, 2, and 4-9) is processed yielding column 10 parity (shown as the submatrix represented by the number "14"). Then, at the end of the first round, column j=8 is punctured and so on for (row, column) pairs: (3,6), (4,2), (5,7), (6,1), (7,4), (8,5).

The 128-bit ciphertext output from the JSALE process 1101 is outputted from columns 9-16 ($8\times16=128$-bit) of the last row i=8. The decryption/decoding JSALE process 1101 is performed the same way but in reverse row order. Row i=8 encoder yields column 5 (shown as the submatrix represented by the number "4") and punctures column j=16. Row i=7 encoder yields column 4 (shown as the submatrix represented by the number "10") and punctures column j=15 and so on.

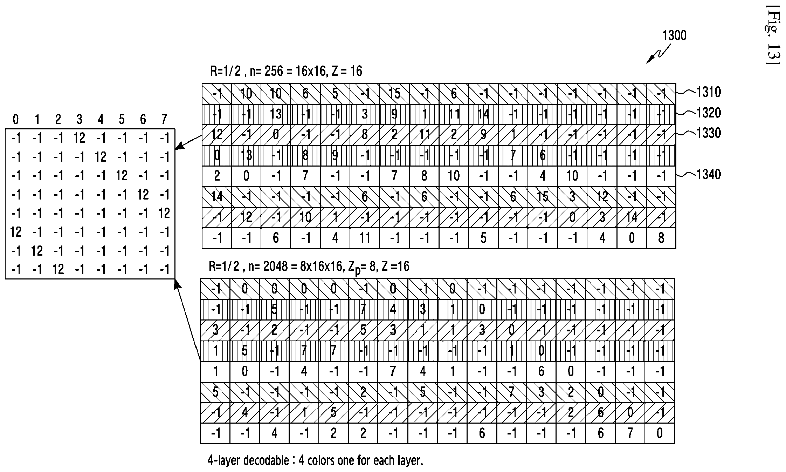

FIGURE 13 illustrates an example of a Hierarchical-Z H-matrix method according to embodiments of the present disclosure. The Hierarchical-Z H-matrix method 1300 is for illustration only. Other embodiments could be used without departing from the scope of this disclosure.

The Hierarchical-Z H-matrix method 1300 uses a JSALE and SLCC H-Matrix structure for Rs=1/2. The upper H-Matrix structure is related to the JSALE 256-bit Rate ½LDPC code as described in reference to FIGURES 9-10. The 256-bit H-Matrix that consists of 8 rows and 16 columns is then lifted again with Zp=8 to support 2048-bit SLCC code. The hierarchical lifting process and the decoding reuse helps maintain the same H-Matrix characteristics as the JSALE code while reusing its decoder hardware for channel coding.

The JSALC (JSALE + SLCC) performance can be further optimized based on the channel characteristics, the SLCC structure (code rate, etc.), and JSALE LDPC code structure to support a tradeoff between the allowed $t \geq 0$ bit errors in the JSALE decoder input (bit errors occurred in the channel and/or the SLCC decoder that were NOT corrected by the SLCC decoder and passed to the JSALE decoder input) with the total JSALE code rate Re. For example, if the tradeoff $t \neq 0$ bit errors for the SLCC decoder output and the JSALE decryption input, then the result is a reduction in Zp SLCC code and a lower complexity(i.e., reduced number of iterations) SLCC decoder. However, some cases, an increase to the JSALE decoder complexity (i.e. increased number of iterations) is needed to recover the plaintext. In addition, code puncturing may increase the decoding complexity, especially when a non-linear function (i.e., S-Box) is embedded in the code. An alternative solution is to reduce the JSALE code rate Re (reduce Rpunc) and maintain the JSALE decoder complexity to be low. In addition, the R=1/2 8x16 H-Matrix structure can be used for different block sizes (i.e. WiGig - 672-bit, etc.), while changing the size of the lifting factor Z (i.e. 42) for both the JSALE and the SLCC. Increasing the lifting factor Z may increase the minimum distance and the overall JS ALE diffusion and enable higher code rate (Re).

The security level of the JSALC scheme can be measured by the JSALC resistance to cryptanalysis. The JSALC resistance to differential cryptanalysis is based on a chosen plaintext attack. Differential cryptanalysis is based on tracking and trailing the differences between pairs of plaintexts over the rounds as they transform to ciphertexts. For an n-bit non-linear function, the probability threshold to reach differential uniformity (cryptanalysis complexity is equal to the brute force $O(2^n)$) can be expressed as $T_d = 2^{-(n-1)}$. In the JSALC system, as in AES, n=128. The S-Box blocks of the AES standard can be used in the JSALC system, where the maximum differential probability is $4/256 = 2^{-6}$ The HD linear transformation has a branch factor of 5 (between rounds) which results with total of $(2^{-6})^{40} = 2^{-240}$ maximum differential probability after 8 rounds. The total calculated maximum differential probability $2^{-240} << T_d = 2^{-127}$ which means that the JSALC system, using the S-Box and HD functions as defined in AES, has reached the differential uniformity and is immune to differential attacks to the same level as brute force attacks with complexity $O(2^{128})$ . These measurement results also confirm that a much lower complexity S-Box and HD than as defined in the AES standard of REF7 can achieve the same threshold T (for example, S-Box degree can be reduced from 8 to 4). The same can be applied to linear cryptanalysis which is a referred to as a plaintext attack that uses the linearity of the cipher to recover the key. The linear uniformity threshold is defined as the probability of input-output correlation $T_1 = 2^{-n/2}$. The maximum AES S-Box input-output correlation is $1/8 = 2^{-3}$. Hence, after 8 rounds the total maximum linear probability is $(2^{-3})^{40} = 2^{-120} << T_l = 2^{-64}$. The result also confirms that reduced complexity S-Box and HD functions can be applied in JSALC to reach the same resistance level as AES. The security level of the JSALC scheme can be measured by for resilience against square attacks which are chosen plaintext attacks on byte-based ciphers. The JSALC system using the JSALE LDPC code is more resistant to square attacks than AES, because, unlike the AES standard, the JSALC system including the JSALE LDPC code is a bit-based cipher system.

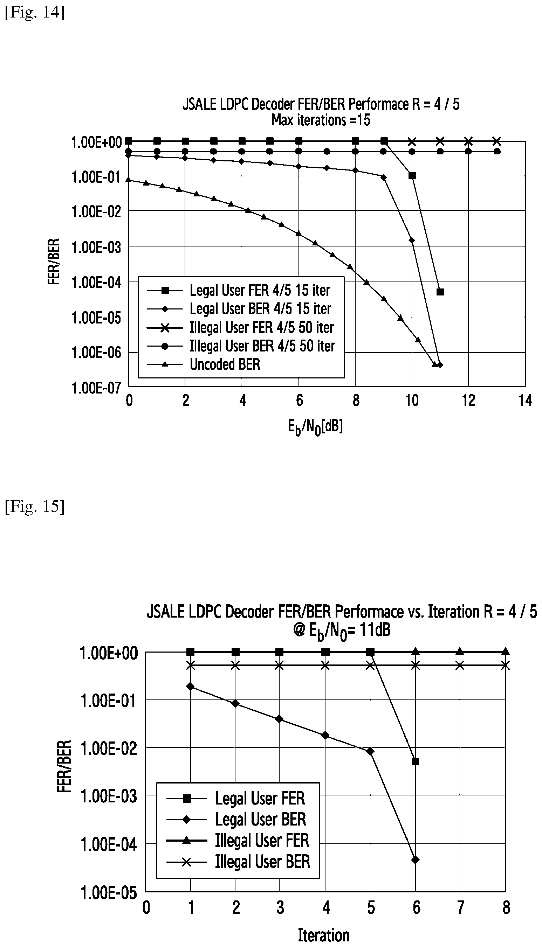

FIGURE 14 illustrates JSALE bit error rate (BER)/frame error rate (FER) performance. The FER/BER performance results of JSALE LDPC decoder for two different scenarios are shown. In a first scenario represents a legitimate intended user with Re=4/5 and 15 iterations is shown. In the second scenario, legitimate intended user (shown as a legal user) with Re=4/5 and 50 iterations is shown. The LDPC decoder used is a layered decoder as described in REF34. The QPSK uncoded BER performance is also shown for comparison.

While the LDPC FER performance for an illegitimate hacker (shown as illegal user) is kept to FER=1 regardless of the SNR, the LDPC decoding FER performance for a legitimate intended user with Re=4/5 and 15 iterations is already smaller than 10E-4 for $E_b/N_0 \geq 11$ dB.

As explained above, the JSALE LDPC encoder rate is R=1/2, hence the input data is packed in blocks of 128-bit to provide 256-bit encoded data. The H-matrix used for the JSALE LDPC encoder and decoder is the same as described in reference to FIGURE 8, where the secondary lifting factor Zp=1. The 256-bit encoded output block is then punctured at rate Rpunc to provide a final rate of Re=R/(1-Rpunc). The data is then fed into the Tx QPSK modulator and sent to the receiver through the Additive White Gaussian Noise (AWGN) channel. The signal received at the Rx input is QPSK demodulated and then de-punctured to recover the 256-bit received Log-Likelihood Ratio (LLR) input for the R=1/2 256-bit LDPC decoder. As an example, the LLR soft data outputted from the SLCC decoder is AWGN.

FIGURE 15 illustrates the JSALE FER/BER performance with respect to the JSALE decoding number of iterations at Re=4/5 and $E_b/N_0 = 13$ dB. The JSALE LDPC decoder FER performance is maintained close to 1 for all iterations smaller than 6. Then on the 6th iteration the FER performance becomes lower than 10E-2. Due to the puncturing and S-Box, multiple iterations are required to correctly recover the plaintext. Hence, even if the SLCC decoder does not converge to error-free blocks, the JSALE decoder can still correct the errors with increased number of iterations (as explained above).

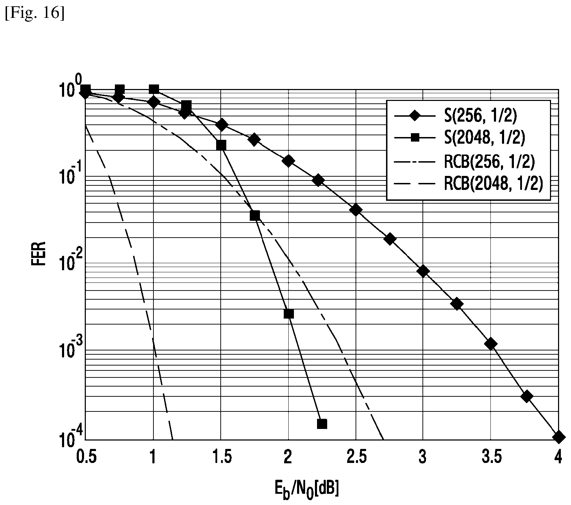

FIGURE 16 illustrates the SLCC decoder performance with Zp=8 (2048-bit) compared to JSALE decoder with Zp=1 (256-bit) as described in FIGURE 14. The FER performance is compared between the two and to the theoretical Random Coding Bound (RCB) for each block size. The increased 2048-bit block size SLCC decoder has 1.75 dB better FER performance over the 256-bit block decoder at FER = 10E-4. This result shows that in the SLCC code supports bigger blocks sizes (over 1000-bits) that do not always align with the encryption blocks having 128-bits.

The result also shows that if we select to maintain the low block sizes LDPC codes we would lose more than 1.5 dB FER performance which translates to lower data rate for the same SNR or higher SNR required to get the same data rate. Both the 2048-bit and the 256-bit LDPC decoder FER performances are still about 1 dB worse than the corresponding RCB performances. The reason for the 1 dB gap from the RCB is the quasi-cyclic format of the LDPC code that puts the code in a more regular form to reduce implementation complexity, thus significantly reducing the LDPC encoder/ decoder power consumption.

As described above, an operation of a transmission apparatus according to various exemplary embodiments of the present disclosure may encode data, which is generated through the encryption module 510, through the encoding module 520. The transmission apparatus may transmit the encoded data through the TX RF module 540.

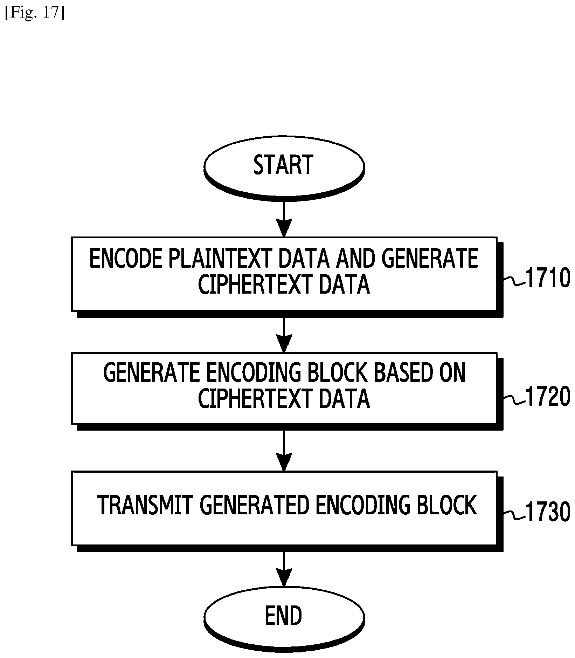

FIGURE 17 is a flowchart illustrating an operation of a transmission apparatus according to various exemplary embodiments of the present disclosure.

Referring to FIG. 17, in step 1710, the transmission apparatus 500 may encode plaintext data and generate ciphertext data. Here, the plaintext data may be data inputted to the transmission apparatus by a user, etc. Also, the plaintext data may be data received from the internal of the transmission apparatus. Also, the plaintext data may be data received from the external of the transmission apparatus. Here, the encoding process may include operations of addition of a key, byte substitution, column permutation, parity bit addition, etc.

In step 1720, the transmission apparatus 500 may generate an encoding block based on the ciphertext data.

In step 1730, the transmission apparatus 500 may transmit the encoding block. The operation of step 1730 may be performed by the TX RF module 540. The encoding block may be transmitted to the reception apparatus 555.

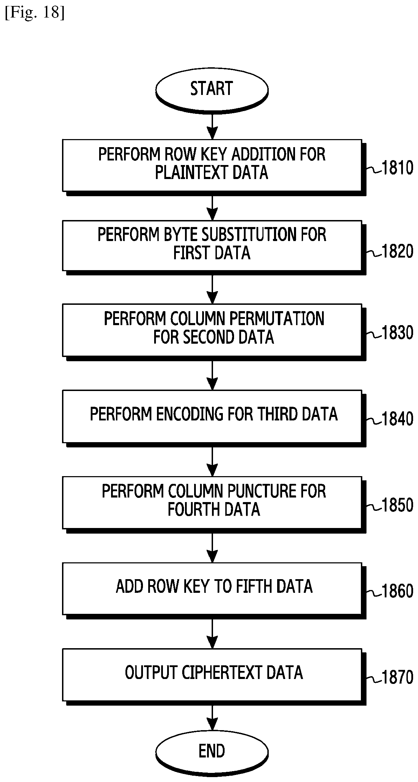

FIGURE 18 is a flowchart illustrating an encryption operation of a transmission apparatus according to various exemplary embodiments of the present disclosure.

Referring to FIG. 18, in step 1810, the transmission apparatus 500 may add a row key to a plaintext data. In detail, the transmission apparatus 500 may add the row key to the plaintext data and output a first data. The row key may be added to the plaintext data by applying an XOR function to bits included in a row of an H matrix and the row key.

In step 1820, the transmission apparatus 500 may perform byte substitution for the first data. In detail, the transmission apparatus 500 may output a second data performing byte substitution for the first data. Here, the byte substitution may be accomplished using S-BOX 910. Also, the byte substitution may be accomplished non-linearly. Accordingly, the second data may be nonlinear data.

In step 1830, the transmission apparatus 500 may perform column permutation for the second data. The transmission apparatus 500 may output a third data performing column permutation for the second data. Here, the column permutation may be performed through High Diffusion (HD). The high diffusion may be a non-binary operation.

In step 1840, the transmission apparatus 500 may perform encoding for the third data. The transmission apparatus 500 may output a fourth data encoding a predefined $i^{th}$ row of the third data. The encoding may include an operation of adding a parity bit to the third data. Here, the added parity bit may be S0.8, S1.9,..., S7.15, etc. illustrated in FIGURE. 8.

In step 1850, the transmission apparatus 500 may perform puncturing for the fourth data. The transmission apparatus 500 may perform puncture based on a puncture rate (Rpunc) and a complementary puncture rate ($\overline{R}_{punc}$) for a $j^{th}$ column of the fourth data, and output a fifth data.

In step 1860, the transmission apparatus 500 may add a row key to the fifth data. The transmission apparatus 500 may add a key to a row of the fifth data and output a sixth data.

The transmission apparatus 500 may iteratively perform step 1820 to step 1860 based on a predefined number of rounds.

In step 1870, the transmission apparatus 500 may output the sixth data as ciphertext data. Steps 1810 to 1870 may be operations of source coding plaintext data.

The outputted ciphertext data may be inputted to the encoding module 520 for the sake of channel coding.

As described above, an operation of the reception apparatus 555 according to various exemplary embodiments of the present disclosure may receive ciphertext data through the RX RF module 565. The reception apparatus 500 may perform decoding (i.e., channel decoding) through the decoding module 580. Also, the reception apparatus 500 may decrypt (i.e., source decode) the decoded data through the decryption module 590.

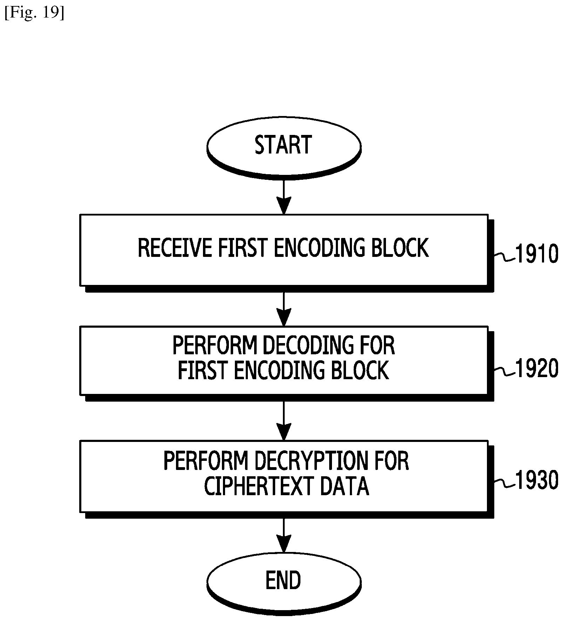

FIGURE 19 is a flowchart illustrating an operation of a reception apparatus according to various exemplary embodiments of the present disclosure.

Referring to FIGURE 19, in step 1910, the reception apparatus 555 may use the RX RF module 565 to receive a first encoding block. Here, the first encoding block may be encryption coding data transmitted by the transmission apparatus 500.

In step 1920, the reception apparatus 555 may perform decoding for the first encoding block. Here, the decoding may be channel decoding. In detail, in step 1920, the reception apparatus 555 may use a buffer to perform decision (hard decision or soft decision) for the first encoding block. And, the reception apparatus 555 may output a second encoding block based on the decision result. The reception apparatus 555 may perform channel decoding for the outputted second encoding block and output a ciphertext data. The operation of step 1920 may be performed by the decoding module 580 illustrated in FIGURE 5B.

In step 1930, the reception apparatus 555 may perform decryption for the ciphertext data. The decrypting operation may include decoding of a row (i) included in the ciphertext data, puncture of a column (j) included in the ciphertext data, inverse-column permutation, inverse byte substitution, key addition, etc. The operation of step 1930 may be an operation of source decoding channel decoded data.

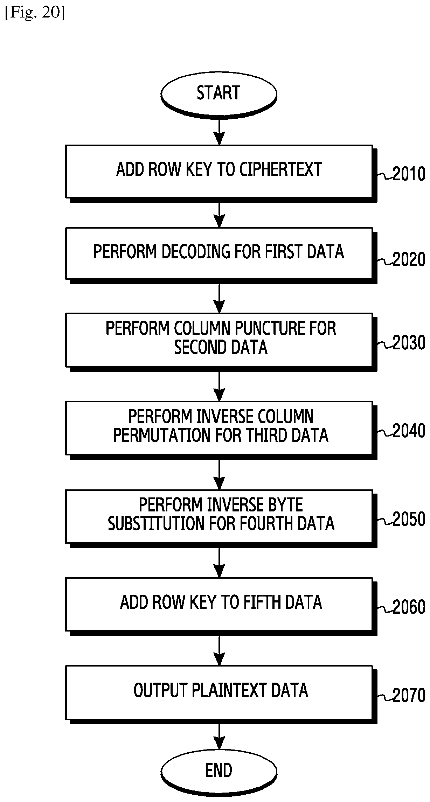

FIGURE 20 is a flowchart illustrating a decryption operation of a reception apparatus according to various exemplary embodiments of the present disclosure.

Referring to FIGURE 20, in step 2010, the reception apparatus 555 may perform an operation of adding a row key to inputted ciphertext data. The reception apparatus 555 may add a key to a row included in the ciphertext data based on an H matrix, and output a first data. The operation of step 2010 may be performed in inverse order of the operation of step 1810 illustrated in FIGURE 18.

In step 2020, the reception apparatus 555 may perform decoding for the first data. The reception apparatus 555 may decode a predefined $i^{th}$ row of the first data and output a second data. The decoding may include an operation of extracting a parity bit included in the first data.

In step 2030, the reception apparatus 555 may perform puncture for the second data. The reception apparatus 555 may puncture the second data based on a puncture rate (Rpunc) and a complementary puncture rate ($\overline{R_{punc}}$), and output a third data. The puncture may be an operation of puncturing a $j^{th}$ column included in the second data.

In step 2040, the reception apparatus 555 may perform inverse-column permutation for the third data. The reception apparatus 555 may output a fourth data performing inverse-column permutation for the third data. Here, the inverse-column permutation may be performed through inverse-high diffusion. The inverse-high diffusion may be a nonlinear operation.

In step 2050, the reception apparatus 555 may perform inverse byte substitution for the fourth data. The reception apparatus 555 may output a fifth data performing inverse byte substitution for the fourth data. The inverse byte substitution may be the inverse execution of byte substitution performed by the transmission apparatus.

In step 2060, the reception apparatus 555 may add a row key to the fifth data. The reception apparatus 555 may add a key to a row of the fifth data and output a sixth data.

The reception apparatus 555 may iteratively perform step 2020 to step 2060 based on a predefined number of rounds. The number of rounds may correspond to the number of rounds in an encoding process performed by the transmission apparatus 500.

In step 2070, the reception apparatus 555 may output the sixth data as a plaintext data. Steps 2010 to 2070 may be operations of source decoding ciphertext data.

A transmission apparatus according to various exemplary embodiments of the present disclosure may include a first encoder for encoding plaintext data according to an effective code rate (Re) and outputting ciphertext data, and a second encoder for encoding a first encoding block corresponding to the ciphertext data and outputting a second encoding block. The effective code rate (Re) may be defined by Re=R/(1-Rpunc). Here, the 'R' may denote a code rate, and the 'Rpunc' may denote a puncture rate. The first encoding block may include Zp x Rs x 2n bits. The second encoding block may include Zp x 2n bits. Here, the 'n' may denote the number of bits of the plaintext data, and the 'Zp' may denote a lifting factor, and the 'Rs' may denote an SLCC code rate.

Also, the transmission apparatus may further include a transmitter for transmitting the second encoding block.

Also, the transmission apparatus may further include a buffer for inputting the ciphertext data and outputting the first encoding block.

Also, the first encoder may include a first key addition layer for adding a row key to the plaintext data and outputting first data, a byte substitution block for inputting the first data, and outputting byte-substituted second data, a row permutation processing block for inputting the second data, and outputting row-permutated third data, an encoding block for inputting the third data, and outputting fourth data encoding a predefined $i^{th}$ row, a puncture block for inputting the fourth data, and outputting fifth data puncturing a predefined $j^{th}$ column based on a puncture rate (Rpunc) and a complementary puncture rate ($\overline{R_{punc}}$), and a second key addition layer for adding a row key to the fifth data and outputting sixth data as the ciphertext data. The outputting of the second key addition layer may be provided to the byte substitution block and be iteratively performed. The key may include Advanced Encryption Standard (AES) keys having a length of at least 128 bits.

Also, the first encoder may be a Joint Security Advanced LDPC Encryption (JSALE) encoder, and the second encoder may be a Security LDPC Channel Coding (SLCC) encoder.

A transmission method according to various exemplary embodiments of the present disclosure may include the processes of encoding plaintext data according to an effective code rate (Re) and outputting ciphertext data, and encoding a first encoding block corresponding to the ciphertext data and outputting a second encoding block. The effective code rate (Re) may be defined by Re=R/(1-Rpunc). Here, the 'R' may denote a code rate, and the 'Rpunc' may denote a puncture rate. The first encoding block may include Zp x Rs x 2n bits. The second encoding block may include Zp x 2n bits. Here, the 'n' may denote the number of bits of the plaintext data, and the 'Zp' may denote a lifting factor, and the 'Rs' may denote an SLCC code rate.

Also, the transmission method may further include a process of transmitting the second encoding block.

Also, the process of encoding the first encoding block corresponding to the ciphertext data and outputting the second encoding block may further include the process of inputting the ciphertext data to a buffer and outputting the first encoding block.

Also, the process of encoding the plaintext data according to the effective code rate (Re) and outputting the ciphertext data may include the process of adding a row key to the plaintext data and outputting first data, the first process of inputting the first data and outputting byte-substituted second data, the second process of inputting the second data and outputting row-permutated third data, the third process of inputting the third data and outputting fourth data encoding a predefined $i^{th}$ row, the fourth process of inputting the fourth data and outputting fifth data puncturing a predefined $j^{th}$ column based on a puncture rate (Rpunc) and a complementary puncture rate ($\overline{R}_{punc}$), and the fifth process of adding a row key to the fifth data and outputting sixth data as the ciphertext data. The sixth data may be inputted in the first process and, until a round is ended, the first process to the fifth process may be iteratively performed. The key may include Advanced Encryption Standard (AES) keys having a length of at least 128 bits.

Also, the process of encoding the plaintext data according to the effective code rate (Re) and outputting the ciphertext data may be performed based on Joint Security Advanced LDPC Encryption (JSALE), and the process of encoding the first encoding block corresponding to the ciphertext data and outputting the second encoding block may be performed based on Security LDPC Channel Coding (SLCC).

A reception apparatus according to various exemplary embodiments of the present disclosure may include a first decoder for decoding a first encoding block and outputting ciphertext data corresponding to a second encoding block, and a second decoder for decoding the ciphertext data according to an effective code rate (Re), and outputting plaintext data. The effective code rate (Re) may be defined by Re=R/(1-Rpunc). Here, the 'R' may denote a code rate, and the 'Rpunc' may denote a puncture rate. The first encoding block may include Zp x 2n bits, and the second encoding block may include Zp x Rs x 2n bits. Here, the 'n' may denote the number of bits of the plaintext data, and the 'Zp' may denote a lifting factor, and the 'Rs' may denote an SLCC code rate.

Also, the reception apparatus may further include a receiver for receiving the first encoding block.

Also, the reception apparatus may further include a buffer for inputting the first encoding block and outputting the second encoding block. The buffer is one of a soft decision buffer including multi-bit precision and a hard decision buffer including single-bit precision.

Also, the second decoder may include a first key addition layer for adding a row key to the ciphertext data and outputting first data, a decoding block for inputting the first data, and outputting second data decoding a predefined $i^{th}$ row, a puncture block for inputting the second data, and outputting third data puncturing a predefined $j^{th}$ column based on a puncture rate (Rpunc) and a complementary puncture rate ($\overline{R}_{punc}$), an inverse column permutation processing block for inputting the third data, and outputting inversely-column-permutated fourth data, a byte substitution block for inputting the fourth data, and outputting inversely-byte-substituted fifth data, and a second key addition layer for adding a row key to the fifth data and outputting sixth data as the plaintext data. The outputting of the second key addition layer may be provided to the decoding block and be iteratively performed. The key may include Advanced Encryption Standard (AES) keys having a length of at least 128 bits.

Also, the first decoder is a Security LDPC Channel Coding (SLCC) decoder, and the second decoder is a Joint Security Advanced LDPC Encryption (JSALE) decoder.

A reception method according to various exemplary embodiments of the present disclosure may include the processes of decoding a first encoding block and outputting ciphertext data corresponding to a second encoding block, and decoding the ciphertext data according to an effective code rate (Re) and outputting plaintext data. The effective code rate (Re) may be defined by Re=R/(1-Rpunc). Here, the 'R' may denote a code rate, and the 'Rpunc' may denote a puncture rate. The first encoding block may include Zp x 2n bits, and the second encoding block may include Zp x Rs x 2n bits. Here, the 'n' may denote the number of bits of the plaintext data, and the 'Zp' may denote a lifting factor, and the 'Rs' may denote an SLCC code rate.

Also, the reception method may further include the process of receiving the first encoding block.

Also, the process of decoding a first encoding block and outputting ciphertext data corresponding to a second encoding block may further include the process of inputting the first encoding block and outputting the second encoding block. The process of inputting the first encoding block and outputting the second encoding block may be performed based on one of soft decision including multi-bit precision and hard decision including single-bit precision.

Also, the process of decoding the ciphertext data according to the effective code rate (Re) and outputting the plaintext data may include the process of adding a row key to the ciphertext data and outputting first data, the first process of inputting the first data and outputting second data decoding a predefined $i^{th}$ row, the second process of inputting the second data and outputting third data puncturing a predefined $j^{th}$ column based on a puncture rate (Rpunc) and a complementary puncture rate $(\overline{R}_{punc})$, the third process of inputting the third data and outputting inversely-column-permutated fourth data, the fourth process of inputting the fourth data and outputting inversely-byte-substituted fifth data, and the fifth process of adding a row key to the fifth data and outputting sixth data as the plaintext data. The sixth data may be inputted in the first process and, until a round is ended, the first process to the fifth process may be iteratively performed. The key may include Advanced Encryption Standard (AES) keys having a length of at least 128 bits.

Also, the process of encoding the first encoding block and outputting the ciphertext data corresponding to the second encoding block may be performed based on Security LDPC Channel Coding (SLCC), and the process of encoding the ciphertext data according to the effective code rate (Re) and outputting the plaintext data may be performed based on Joint Security Advanced LDPC Encryption (JSALE).

Although the present disclosure has been described with an exemplary embodiment, various changes and modifications may be suggested to one skilled in the art. It is intended that the present disclosure encompass such changes and modifications as fall within the scope of the appended claims.

**Claims**

1. A transmission apparatus (601) of a wireless communication system, the apparatus comprising:

   a first encoder (610) configured to output a ciphertext data (615) by encoding a plaintext data (605a) based on $N_r$ rounds of an encryption process (600);
   a buffer (620) configured to input the ciphertext data (615) and output a first encoding block (625), and
   a second encoder (630) configured to output a second encoding block (635t) by encoding the first encoding block (625) based on a channel coding process using low density parity check, LDPC,
   wherein the first encoder is, in order to perform i-th round of the $N_r$ rounds of the encryption process, configured to:

   generate parity bits of a i-th row of an H-matrix of the LDPC by processing the plaintext data; and
   output cryptcoded data by appending the parity bits to the plaintext data, and

   wherein each of the $N_r$ rounds of the encryption process is iteratively performed, and the first encoder is configured to output the ciphertext as cryptcoded data of $N_r$-th round of the encryption process, and wherein the first encoder further comprises:

   a first key addition layer configured to add a row key to the plaintext data and output a first data;
   a byte substitution block configured to input the first data, and output a byte-substituted second data;
   a row permutation processing block configured to input the second data, and output a row-permutated third data;
   an encoding block configured to input the third data, and output a fourth data encoding the $i^{th}$ row of the H matrix to generate the parity bits;
   a puncture block configured to input the fourth data, and output a fifth data puncturing a predefined $j^{th}$ column of the H matrix based on a puncture rate and a complementary puncture rate; and
   a second key addition layer configured to add a row key to the fifth data and output a sixth data as the cryptcoded data, wherein output of the second key addition layer is provided to the byte substitution block and is iteratively performed in the $N_r$ rounds of the encryption process.

2. The transmission apparatus of claim 1, further comprising a transmitter configured to transmit the second encoding block.

3. The transmission apparatus of claim 1,

wherein the key comprises advanced encryption standard, AES, keys having a length of at least 128 bits.

4. The transmission apparatus of claim 1, wherein the second encoder is, in order to output the second encoding block, configured to encode the first encoding block by using the H-matrix of the LDPC and a lifting factor for indicating a number of consecutive bits for the LDPC.

5. A method implemented by a transmission apparatus of one of claims 1 to 4.

6. A reception apparatus (602) of a wireless communication system, the apparatus comprising:

a first decoder (640) configured to output a first encoding block (645) by decoding a second encoding (635r) block based on a channel coding process using low density parity check, LDPC;
a buffer (650) configured to input the first encoding block (645) and output the ciphertext data (655); and
a second decoder (660) configured to output a plaintext data (605b) by decoding the ciphertext data (655) decoding the ciphertext data based on $N_r$ rounds of a deciphering process (600),
wherein the second decoder (660) is, in order to perform i-th round of the $N_r$ rounds of the deciphering process, configured to output decryptcoded data by extracting parity bits of a i-th row of an H-matrix of the LDPC by processing the ciphertext data, and
wherein each of the $N_r$ rounds of the encryption process is iteratively performed, and the first decoder is configured to output the plaintext data as decryptcoded data of $N_r$-th round of the deciphering process, and
wherein the first encoder further comprises;
a first key addition layer configured to add a row key to the plaintext data and output a first data;
a byte substitution block configured to input the first data, and output a byte-substituted second data;
a row permutation processing block configured to input the second data, and output a row-permutated third data;
an encoding block configured to input the third data, and output a fourth data encoding the i$^{th}$ row of the H matrix to generate the parity bits;
a puncture block configured to input the fourth data, and output a fifth data puncturing a predefined j$^{th}$ column of the H matrix based on a puncture rate and a complementary puncture rate; and
a second key addition layer configured to add a row key to the fifth data and output a sixth data as the cryptcoded data, wherein outputting of the second key addition layer is provided to the byte substitution block and is iteratively performed in the $N_r$ rounds of the encryption process.

7. The reception apparatus of claim 6, further comprising a receiver configured to receive the second encoding block.

8. The reception apparatus of claim 6, wherein the buffer is one of a soft decision buffer comprising multi-bit precision and a hard decision buffer comprising single-bit precision.

9. The reception apparatus of claim 6, wherein the key comprises advanced encryption standard, AES, keys having a length of at least 128 bits.

10. The reception apparatus of claim 6, wherein the second decoder is, in order to output the first encoding block, configured to decode the second encoding block by using the H-matrix of the LDPC and a lifting factor for indicating a number of consecutive bits for the LDPC.

11. A method implemented by a reception apparatus of one of claims 6 to 10.

**Patentansprüche**

1. Übertragungsvorrichtung (601) eines drahtlosen Kommunikationssystems, wobei die Vorrichtung Folgendes umfasst:

einen ersten Codierer (610), der konfiguriert ist, um Chiffretextdaten (615) auszugeben, indem Klartextdaten (605a) basierend auf $N_r$ Runden eines Verschlüsselungsprozesses (600) codiert werden;
einen Puffer (620), der konfiguriert ist, um die Chiffretextdaten (615) einzugeben und einen ersten Codierungsblock (625) auszugeben, und
einen zweiten Codierer (630), der konfiguriert ist, um einen zweiten Codierungsblock (635t) auszugeben, indem der erste Codierungsblock (625) basierend auf einem Kanalcodierungsprozess unter Verwendung einer Paritätsprüfung niedriger Dichte, LDPC, codiert wird,
wobei der erste Codierer, um eine i-te Runde der $N_r$ Runden des Verschlüsselungsprozesses durchzuführen, für Folgendes konfiguriert ist:

Erzeugen von Paritätsbits einer i-ten Zeile einer H-Matrix der LDPC durch Verarbeiten der Klartextdaten; und
Ausgeben von kryptcodierten Daten, indem die Paritätsbits an die Klartextdaten angehängt werden, und

wobei jede der $N_r$ Runden des Verschlüsselungsprozesses iterativ durchgeführt wird, und der erste Codierer konfiguriert ist, um den Chiffretext als kryptcodierte Daten der $N_r$-ten Runde des Verschlüsselungsprozesses auszugeben, und wobei der erste Codierer ferner Folgendes umfasst:

eine erste Schlüsselhinzufügungsschicht, die konfiguriert ist, um den Klartextdaten einen Zeilenschlüssel hinzuzufügen und erste Daten auszugeben;
einen Bytesubstitutionsblock, der konfiguriert ist, um die ersten Daten einzugeben und bytesubstituierte zweite Daten auszugeben;
einen Zeilenpermutationsverarbeitungsblock, der konfiguriert ist, um die zweiten Daten einzugeben und zeilenpermutierte dritte Daten auszugeben;
einen Codierungsblock, der konfiguriert ist, um die dritten Daten einzugeben und vierte Daten auszugeben, welche die i-te Zeile der H-Matrix codieren, um die Paritätsbits zu erzeugen;
einen Punktionsblock, der konfiguriert ist, um die vierten Daten einzugeben und fünfte Daten auszugeben, die eine vordefinierte j-te Spalte der H-Matrix basierend auf einer Punktionsrate und einer komplementären Punktionsrate punktieren; und
eine zweite Schlüsselhinzufügungsschicht, die konfiguriert ist, um den fünften Daten einen Zeilenschlüssel hinzuzufügen und sechste Daten als kryptcodierte Daten auszugeben, wobei Ausgabe der zweiten Schlüsselhinzufügungsschicht dem Bytesubstitutionsblock bereitgestellt wird und iterativ in den $N_r$ Runden des Verschlüsselungsprozesses durchgeführt wird.

2. Übertragungsvorrichtung nach Anspruch 1, ferner umfassend einen Sender, der konfiguriert ist, um den zweiten Codierungsblock zu senden.

3. Übertragungsvorrichtung nach Anspruch 1,
wobei der Schlüssel Advanced-Encryption-Standard-Schlüssel, AES-Schlüssel, umfasst, die eine Länge von mindestens 128 Bit aufweisen.

4. Übertragungsvorrichtung nach Anspruch 1, wobei der zweite Codierer, um den zweiten Codierungsblock auszugeben, konfiguriert ist, um den ersten Codierungsblock zu codieren, indem die H-Matrix der LDPC und ein Hubfaktor zum Angeben einer Anzahl an aufeinanderfolgenden Bits für die LDPC verwendet wird.

5. Verfahren, das durch eine Übertragungsvorrichtung nach einem der Ansprüche 1 bis 4 implementiert wird.

6. Empfangsvorrichtung (602) eines drahtlosen Kommunikationssystems, wobei die Vorrichtung Folgendes umfasst:

einen ersten Decodierer (640), der konfiguriert ist, um einen ersten Codierungsblock (645) auszugeben, indem ein zweiter Codierungsblock (635r) basierend auf einem Kanalcodierungsprozess unter Verwendung einer Paritätsprüfung niedriger Dichte, LDPC, decodiert wird;
einen Puffer (650), der konfiguriert ist, um den ersten Codierungsblock (645) einzugeben und die Chiffretextdaten (655) auszugeben; und
einen zweiten Decodierer (660), der konfiguriert ist, um Klartextdaten (605b) auszugeben, indem die Chiffretextdaten (655) basierend auf $N_r$ Runden eines Entschlüsselungsprozesses (600) decodiert werden die Chiffretextdaten decodiert werden;
wobei der zweite Decodierer (660), um eine i-te Runde der $N_r$ Runden des Entschlüsselungsprozesses durchzuführen, konfiguriert ist, um entschlüsselte Daten auszugeben, indem Paritätsbits einer i-ten Zeile einer H-Matrix der LDPC extrahiert werden, indem die Chiffretextdaten verarbeitet werden, und
wobei jede der $N_r$ Runden des Verschlüsselungsprozesses iterativ durchgeführt wird und der erste Decodierer konfiguriert ist, um die Klartextdaten als entschlüsselte Daten der $N_r$-ten Runde des Entschlüsselungsprozesses auszugeben, und
wobei der erste Codierer ferner Folgendes umfasst:

eine erste Schlüsselhinzufügungsschicht, die konfiguriert ist, um den Klartextdaten einen Zeilenschlüssel hinzuzufügen und erste Daten auszugeben;

einen Bytesubstitutionsblock, der konfiguriert ist, um die ersten Daten einzugeben und bytesubstituierte zweite Daten auszugeben;

einen Zeilenpermutationsverarbeitungsblock, der konfiguriert ist, um die zweiten Daten einzugeben und zeilenpermutierte dritte Daten auszugeben;

einen Codierungsblock, der konfiguriert ist, um die dritten Daten einzugeben und vierte Daten auszugeben, welche die i-te Zeile der H-Matrix codieren, um die Paritätsbits zu erzeugen;

einen Punktionsblock, der konfiguriert ist, um die vierten Daten einzugeben und fünfte Daten auszugeben, die eine vordefinierte j-te Spalte der H-Matrix basierend auf einer Punktionsrate und einer komplementären Punktionsrate punktieren; und

eine zweite Schlüsselhinzufügungsschicht, die konfiguriert ist, um den fünften Daten einen Zeilenschlüssel hinzuzufügen und sechste Daten als kryptcodierte Daten auszugeben, wobei das Ausgeben der zweiten Schlüsselhinzufügungsschicht dem Bytesubstitutionsblock bereitgestellt wird und iterativ in den $N_r$ Runden des Verschlüsselungsprozesses durchgeführt wird.

7. Empfangsvorrichtung nach Anspruch 6, ferner umfassend einen Empfänger, der konfiguriert ist, um den zweiten Codierungsblock zu empfangen.

8. Empfangsvorrichtung nach Anspruch 6, wobei der Puffer einer von einem weichen Entscheidungspuffer, der Mehrbitgenauigkeit umfasst, und einem harten Entscheidungspuffer ist, der Einzelbitgenauigkeit umfasst.

9. Empfangsvorrichtung nach Anspruch 6, wobei der Schlüssel Advanced-Encryption-Standard-Schlüssel, AES-Schlüssel, umfasst, die eine Länge von mindestens 128 Bit umfassen.

10. Empfangsvorrichtung nach Anspruch 6, wobei der zweite Decodierer, um den ersten Codierungsblock auszugeben, konfiguriert ist, um den zweiten Codierungsblock zu decodieren, indem die H-Matrix der LDPC und ein Hubfaktor zum Angeben einer Anzahl an aufeinanderfolgenden Bits für die LDPC verwendet wird.

11. Verfahren, implementiert durch eine Empfangsvorrichtung nach einem der Ansprüche 6 bis 10.

## Revendications

1. Appareil d'émission (601) d'un système de communication sans fil, l'appareil comprenant :

un premier codeur (610) configuré pour délivrer en sortie des données de texte chiffré (615) en codant des données en texte clair (605a) sur la base de $N_r$ rondes d'un processus de chiffrement (600) ;

une mémoire tampon (620) configurée pour entrer les données de texte chiffré (615) et délivrer en sortie un premier bloc de codage (625), et

un second codeur (630) configuré pour délivrer en sortie un second bloc de codage (635t) en codant le premier bloc de codage (625) sur la base d'un processus de codage de canal à l'aide d'un contrôle de parité de faible densité, LDPC,

ledit premier codeur étant, afin d'effectuer la i-ème ronde des $N_r$ rondes du processus de chiffrement, configuré pour :

générer des bits de parité d'une i-ème ligne d'une matrice H du LDPC en traitant les données en texte clair ; et délivrer en sortie des données chiffrées et codées en ajoutant les bits de parité aux données en texte clair, et

chacune des $N_r$ rondes du processus de chiffrement étant effectuée de manière itérative, et ledit premier codeur étant configuré pour délivrer en sortie le texte chiffré sous forme de données chiffrées et codées de la $N_r$-ième ronde du processus de chiffrement, et ledit premier codeur comprenant en outre :

une première couche d'addition de clé configurée pour ajouter une clé de ligne aux données de texte clair et délivrer en sortie des premières données ;

un bloc de substitution d'octet configuré pour entrer les premières données, et délivrer en sortie des deuxièmes données substituées par octets ;

un bloc de traitement de permutation de ligne configuré pour entrer les deuxièmes données, et délivrer en sortie des troisième données permutées par ligne ;

un bloc de codage configuré pour entrer les troisièmes données, et délivrer en sortie des quatrièmes données codant la $i^{ième}$ ligne de la matrice H pour générer les bits de parité ;

un bloc de perforation configuré pour entrer les quatrièmes données, et délivrer en sortie des cinquièmes données perforant une $j^{ème}$ colonne prédéfinie de la matrice H sur la base d'un taux de perforation et d'un taux de perforation complémentaire ; et

une seconde couche d'addition de clé configurée pour ajouter une clé de ligne aux cinquièmes données et délivrer en sortie des sixièmes données sous forme de données chiffrées et codées, la sortie de la seconde couche d'addition de clé étant fournie au bloc de substitution d'octet et étant effectuée de manière itérative dans les $N_r$ rondes du processus de chiffrement.

2. Appareil d'émission selon la revendication 1, comprenant en outre un émetteur configuré pour émettre le second bloc de codage.

3. Appareil d'émission selon la revendication 1,
ladite clé comprenant des clés de norme de chiffrement avancée, AES, d'une longueur supérieure ou égale à 128 bits.

4. Appareil d'émission selon la revendication 1, ledit second codeur étant, afin de délivrer en sortie le second bloc de codage, configuré pour coder le premier bloc de codage à l'aide de la matrice H du LDPC et d'un facteur d'élévation pour indiquer un nombre de bits consécutifs pour le LDPC.

5. Procédé mis en œuvre par un appareil d'émission selon l'une des revendications 1 à 4.

6. Appareil de réception (602) d'un système de communication sans fil, l'appareil comprenant :

un premier décodeur (640) conçu pour délivrer en sortie un premier bloc de codage (645) en décodant un second bloc de codage (635r) sur la base d'un processus de codage de canal à l'aide d'un contrôle de parité de faible densité, LDPC ;

une mémoire tampon (650) configurée pour entrer le premier bloc de codage (645) et délivrer en sortie les données de texte chiffré (655) ; et

un second décodeur (660) conçu pour délivrer en sortie des données en texte clair (605b) en décodant les données de texte chiffré (655) décodant les données de texte chiffré sur la base de $N_r$ rondes d'un processus de déchiffrage (600),

ledit second décodeur (660) étant, afin d'effectuer la i-ème ronde des $N_r$ rondes du processus de déchiffrage, configuré pour délivrer en sortie des données déchiffrées et codées en extrayant des bits de parité d'une i-ème rangée d'une matrice H du LDPC en traitant les données de texte chiffré, et

chacune des $N_r$ rondes du processus de chiffrement étant effectuée de manière itérative, et ledit premier décodeur étant configuré pour délivrer en sortie les données de texte clair sous forme de données déchiffrées et codées de la $N_r$-ième ronde du processus de déchiffrage, et

ledit premier codeur comprenant en outre ;

une première couche d'addition de clé configurée pour ajouter une clé de ligne aux données de texte clair et délivrer en sortie des premières données ;

un bloc de substitution d'octet configuré pour entrer les premières données, et délivrer en sortie des deuxièmes données substituées par octets ;

un bloc de traitement de permutation de ligne configuré pour entrer les deuxièmes données, et délivrer en sortie des troisième données permutées par ligne ;

un bloc de codage configuré pour entrer les troisièmes données, et délivrer en sortie des quatrièmes données codant la $i^{ème}$ ligne de la matrice H pour générer les bits de parité ;

un bloc de perforation configuré pour entrer les quatrièmes données, et délivrer en sortie des cinquièmes données perforant une $j^{ème}$ colonne prédéfinie de la matrice H sur la base d'un taux de perforation et d'un taux de perforation complémentaire ; et

une seconde couche d'addition de clé configurée pour ajouter une clé de ligne aux cinquièmes données et délivrer en sortie des sixièmes données sous forme de données chiffrées et codées, la sortie de la seconde couche d'addition de clé étant fournie au bloc de substitution d'octet et effectuée de manière itérative dans les $N_r$ rondes du processus de chiffrement.

7. Appareil de réception selon la revendication 6, comprenant en outre un récepteur configuré pour recevoir le second bloc de codage.

8. Appareil de réception selon la revendication 6, ladite mémoire tampon étant l'une d'une mémoire tampon de décision souple comprenant une précision multibits et d'une mémoire tampon de décision dure comprenant une précision d'un seul bit.

9. Appareil de réception selon la revendication 6, ladite clé comprenant des clés de norme de chiffrement avancée, AES, possédant une longueur supérieure ou égale à 128 bits.

10. Appareil de réception selon la revendication 6, ledit second décodeur étant, afin de délivrer en sortie le premier bloc de codage, configuré pour décoder le second bloc de codage à l'aide de la matrice H du LDPC et d'un facteur d'élévation pour indiquer un nombre de bits consécutifs pour le LDPC.

11. Procédé mis en œuvre par un appareil de réception selon l'une des revendications 6 à 10.

[Fig. 1]

[Fig. 2a]

[Fig. 2b]

[Fig. 3]

116

330
SPEAKER

325
RX PROCESSING CIRCUITRY

310
RF TRANSCEIVER

305

320
MICROPHONE

315
TX PROCESSING CIRCUITRY

345
I/O IF

340
MAIN PROCESSOR

350
KEYPAD

DISPLAY
355

360
MEMORY

BASIC OPERATING SYSTEM
361

APPLICATIONS
362

[Fig. 4a]

400

128-bit Plaintext

405

AES Encryption (Nr=10)
410

128-bit Ciphertext

415

LDPC Encoder
420

672-bit Blocks Encoded

425

[Fig. 4b]

[Fig. 5a]

[Fig. 5b]

[Fig. 6]

[Fig. 7a]

36

[Fig. 7b]

|    | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 |
|----|---|---|---|---|---|---|---|---|---|---|----|----|----|----|----|----|----|----|----|----|----|----|----|----|----|----|----|----|----|----|----|----|----|----|----|----|----|----|----|----|----|----|
| 0  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 |
| 1  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ |
| 2  | ▨ | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 |
| 3  | 0 | ▨ | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 4  | 0 | 0 | ▨ | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 |
| 5  | 0 | 0 | 0 | ▨ | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| ⋮  | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |
| 36 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 | 0 | 0 | 0 | 0 | 0 |
| 37 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 | 0 | 0 | 0 | 0 |
| 38 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 | 0 | 0 | 0 |
| 39 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 | 0 | 0 |
| 40 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 | 0 |
| 41 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | ▨ | 0 | 0 |

[Fig. 7c]

[Fig. 8]

128-bits
Plaintext

605a

801

16-bits

800

| | S0,0 | S0,1 | S0,2 | S0,3 | S0,4 | S0,5 | S0,6 | S0,7 | S0,8 | S0,9 | S0,10 | S0,11 | S0,12 | S0,13 | S0,14 | S0,15 |
|---|---|---|---|---|---|---|---|---|---|---|---|---|---|---|---|---|
| 802a | Key Addition/S-Box/HD | | | | | | | | | | | | | | | |
| 802b | S1,0 | S1,1 | S1,2 | S1,3 | S1,4 | S1,5 | S1,6 | S1,7 | S1,8 | S1,9 | S1,10 | S1,11 | S1,12 | S1,13 | S1,14 | S1,15 |
| 802c | S2,0 | S2,1 | S2,2 | S2,3 | S2,4 | S2,5 | S2,6 | S2,7 | S2,8 | S2,9 | S2,10 | S2,11 | S2,12 | S2,13 | S2,14 | S2,15 |
| 802d | S3,0 | S3,1 | S3,2 | S3,3 | S3,4 | S3,5 | S3,6 | S3,7 | S3,8 | S3,9 | S3,10 | S3,11 | S3,12 | S3,13 | S3,14 | S3,15 |
| 802e | S4,0 | S4,1 | S4,2 | S4,3 | S4,4 | S4,5 | S4,6 | S4,7 | S4,8 | S4,9 | S4,10 | S4,11 | S4,12 | S4,13 | S4,14 | S4,15 |
| 802f | S5,0 | S5,1 | S5,2 | S5,3 | S5,4 | S5,5 | S5,6 | S5,7 | S5,8 | S5,9 | S5,10 | S5,11 | S5,12 | S5,13 | S5,14 | S5,15 |
| 802g | S6,0 | S6,1 | S6,2 | S6,3 | S6,4 | S6,5 | S6,6 | S6,7 | S6,8 | S6,9 | S6,10 | S6,11 | S6,12 | S6,13 | S6,14 | S6,15 |
| 802h | S7,0 | S7,1 | S7,2 | S7,3 | S7,4 | S7,5 | S7,6 | S7,7 | S7,8 | S7,9 | S7,10 | S7,11 | S7,12 | S7,13 | S7,14 | S7,15 |
| 802o | Key Addition | | | | | | | | | | | | | | | |

Key Addition/S-Box/HD

16-bits

16-bits

256-bit
Ciphertext

805

[Fig. 9]

610

Plaintext (128-bit)

605a

905a

Key Addition Layer ← Row Key 0
802a

930 (128-bit)

910

S-BOX

935 (128-bit)

915

HD

940 (128-bit)

920

Encode Row i

945 (144-bit)

925

Puncture Column j

950 (128-bit)

905b

955

Key Addition Layer ← Row Key i, i=1:Nr
802b-o

615

Ciphertext (128-bit)

[Fig. 10]

660

Ciphertext (128-bit)

655

1005a

Key Addition Layer ← Row Key Nr

802o

(128-bit)

1030

1055

Decode Row i    1010

(144-bit)

1035

Puncture Column j    1015

(128-bit)

1040

Inv(HD)    1020

(128-bit)

1045

Inv(S-Box)    1025

(128-bit)

1050

Key Addition Layer ← Row Key i, i=Nr-1:0    1005b

802h-a

605b

Plaintext (128-bit)

[Fig. 11]

[Fig. 12]

| i/j | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | -1 | 10 | 10 | 6 | 5 | -1 | 15 | -1 | 6 | -1 | -1 | -1 | -1 | -1 | -1 | -1 |
| 2 | -1 | -1 | 13 | -1 | -1 | 3 | 9 | 1 | 11 | 14 | -1 | -1 | -1 | -1 | -1 | -1 |
| 3 | 12 | -1 | 0 | -1 | 9 | 8 | 2 | 11 | 2 | 9 | 1 | -1 | -1 | -1 | -1 | -1 |
| 4 | 0 | 13 | -1 | 8 | -1 | -1 | -1 | -1 | -1 | -1 | 7 | 6 | 10 | -1 | -1 | -1 |
| 5 | 2 | 0 | -1 | 7 | -1 | 6 | 7 | 8 | 10 | -1 | 6 | 4 | 3 | 3 | 0 | -1 |
| 6 | 14 | -1 | -1 | 10 | 1 | -1 | -1 | 6 | -1 | -1 | -1 | 15 | 0 | 12 | 14 | -1 |
| 7 | -1 | 12 | -1 | -1 | 4 | -1 | -1 | -1 | -1 | -1 | -1 | -1 | -1 | 3 | -1 | -1 |
| 8 | -1 | -1 | 6 | -1 | -1 | 11 | -1 | -1 | -1 | 5 | -1 | -1 | -1 | 4 | 0 | 8 |

1210
1220
1230
1240

[Fig. 13]

1300

R=1/2 , n= 256 = 16x16, Z = 16

| | | | | | | | | | | | | | | | |
|---|---|---|---|---|---|---|---|---|---|---|---|---|---|---|---|
| -1 | 10 | 10 | 6 | 5 | -1 | 15 | -1 | 6 | -1 | -1 | -1 | -1 | -1 | -1 | -1 |
| -1 | -1 | 13 | -1 | -1 | 3 | 9 | 1 | 11 | 14 | -1 | -1 | -1 | -1 | -1 | -1 |
| 12 | -1 | 0 | -1 | -1 | 8 | 2 | 11 | 2 | 9 | 1 | -1 | -1 | -1 | -1 | -1 |
| 0 | 13 | -1 | 8 | 9 | -1 | -1 | -1 | -1 | -1 | 7 | 6 | -1 | -1 | -1 | -1 |
| 2 | 0 | -1 | 7 | -1 | -1 | 7 | 8 | 10 | -1 | -1 | 4 | 10 | -1 | -1 | -1 |
| 14 | -1 | -1 | -1 | -1 | 6 | -1 | 6 | -1 | -1 | 6 | 15 | 3 | 12 | -1 | -1 |
| -1 | 12 | -1 | 10 | 1 | -1 | -1 | -1 | -1 | -1 | -1 | 0 | 3 | 14 | -1 | -1 |
| -1 | -1 | 6 | -1 | 4 | 11 | -1 | -1 | -1 | 5 | -1 | -1 | -1 | 4 | 0 | 8 |

~1310
~1320
~1330
~1340

| | 0 | 1 | 2 | 3 | 4 | 5 | 6 | 7 |
|---|---|---|---|---|---|---|---|---|
| | -1 | -1 | -1 | 12 | -1 | -1 | -1 | -1 |
| | -1 | -1 | -1 | -1 | 12 | -1 | -1 | -1 |
| | -1 | -1 | -1 | -1 | -1 | 12 | -1 | -1 |
| | -1 | -1 | -1 | -1 | -1 | -1 | 12 | -1 |
| | -1 | -1 | -1 | -1 | -1 | -1 | -1 | 12 |
| | 12 | -1 | -1 | -1 | -1 | -1 | -1 | -1 |
| | -1 | 12 | -1 | -1 | -1 | -1 | -1 | -1 |
| | -1 | -1 | 12 | -1 | -1 | -1 | -1 | -1 |

R=1/2 , n = 2048 = 8x16x16, $Z_p$= 8, Z =16

| | | | | | | | | | | | | | | | |
|---|---|---|---|---|---|---|---|---|---|---|---|---|---|---|---|
| -1 | 0 | 0 | 0 | 0 | -1 | 0 | -1 | 0 | -1 | -1 | -1 | -1 | -1 | -1 | -1 |
| -1 | -1 | 5 | -1 | -1 | 7 | 4 | 3 | 1 | 0 | -1 | -1 | -1 | -1 | -1 | -1 |
| 3 | -1 | 2 | -1 | -1 | 5 | 3 | 1 | 1 | 3 | 0 | -1 | -1 | -1 | -1 | -1 |
| 1 | 5 | -1 | 7 | 7 | -1 | -1 | -1 | -1 | -1 | 1 | 0 | -1 | -1 | -1 | -1 |
| 1 | 0 | -1 | 4 | -1 | -1 | 7 | 4 | 1 | -1 | -1 | 6 | 0 | -1 | -1 | -1 |
| 5 | -1 | -1 | -1 | -1 | 2 | -1 | 5 | -1 | -1 | 7 | 3 | 2 | 0 | -1 | -1 |
| -1 | 4 | -1 | -1 | 5 | -1 | -1 | -1 | -1 | -1 | -1 | 2 | 6 | 0 | -1 | -1 |
| -1 | -1 | 4 | -1 | 2 | 2 | -1 | -1 | -1 | 6 | -1 | -1 | -1 | 6 | 7 | 0 |

4-layer decodable : 4 colors one for each layer.

43

[Fig. 14]

**JSALE LDPC Decoder FER/BER Performace R = 4 / 5**
**Max iterations =15**

Legend:
- Legal User FER 4/5 15 iter
- Legal User BER 4/5 15 iter
- Illegal User FER 4/5 50 iter
- Illegal User BER 4/5 50 iter
- Uncoded BER

X axis: $E_b/N_0$[dB]
Y axis: FER/BER

[Fig. 15]

**JSALE LDPC Decoder FER/BER Performace vs. Iteration R = 4 / 5**
**@ $E_b/N_0$= 11dB**

Legend:
- Legal User FER
- Legal User BER
- Illegal User FER
- Illegal User BER

X axis: Iteration
Y axis: FER/BER

[Fig. 16]

[Fig. 17]

```
                    ┌─────────────┐
                    │    START    │
                    └──────┬──────┘
                           │
                           ▼
      ┌────────────────────────────────────────┐
      │  ENCODE PLAINTEXT DATA AND GENERATE      │ ～1710
      │           CIPHERTEXT DATA                │
      └────────────────────┬───────────────────┘
                           │
                           ▼
      ┌────────────────────────────────────────┐
      │  GENERATE ENCODING BLOCK BASED ON        │ ～1720
      │            CIPHERTEXT DATA                │
      └────────────────────┬───────────────────┘
                           │
                           ▼
      ┌────────────────────────────────────────┐
      │   TRANSMIT GENERATED ENCODING BLOCK      │ ～1730
      └────────────────────┬───────────────────┘
                           │
                           ▼
                    ┌─────────────┐
                    │     END     │
                    └─────────────┘
```

[Fig. 18]

```
                          ┌─────────┐
                          │  START  │
                          └────┬────┘
                               ▼
        ┌────────────────────────────────────────┐
        │   PERFORM ROW KEY ADDITION FOR          │ ～1810
        │         PLAINTEXT DATA                  │
        └────────────────────┬───────────────────┘
                             ▼
        ┌────────────────────────────────────────┐
        │   PERFORM BYTE SUBSTITUTION FOR         │ ～1820
        │            FIRST DATA                   │
        └────────────────────┬───────────────────┘
                             ▼
        ┌────────────────────────────────────────┐
        │   PERFORM COLUMN PERMUTATION            │ ～1830
        │         FOR SECOND DATA                 │
        └────────────────────┬───────────────────┘
                             ▼
        ┌────────────────────────────────────────┐
        │   PERFORM ENCODING FOR THIRD DATA       │ ～1840
        └────────────────────┬───────────────────┘
                             ▼
        ┌────────────────────────────────────────┐
        │   PERFORM COLUMN PUNCTURE FOR           │ ～1850
        │            FOURTH DATA                  │
        └────────────────────┬───────────────────┘
                             ▼
        ┌────────────────────────────────────────┐
        │      ADD ROW KEY TO FIFTH DATA          │ ～1860
        └────────────────────┬───────────────────┘
                             ▼
        ┌────────────────────────────────────────┐
        │      OUTPUT CIPHERTEXT DATA             │ ～1870
        └────────────────────┬───────────────────┘
                             ▼
                          ┌─────────┐
                          │   END   │
                          └─────────┘
```

[Fig. 19]

```
        ┌─────────────┐
        │    START    │
        └──────┬──────┘
               │
               ▼
    ┌──────────────────────────┐
    │ RECEIVE FIRST ENCODING BLOCK │  ～1910
    └──────────┬───────────────┘
               │
               ▼
    ┌──────────────────────────┐
    │    PERFORM DECODING FOR   │  ～1920
    │     FIRST ENCODING BLOCK  │
    └──────────┬───────────────┘
               │
               ▼
    ┌──────────────────────────┐
    │   PERFORM DECRYPTION FOR  │  ～1930
    │       CIPHERTEXT DATA     │
    └──────────┬───────────────┘
               │
               ▼
        ┌─────────────┐
        │     END     │
        └─────────────┘
```

[Fig. 20]

```
                    ┌─────────────┐
                    │    START    │
                    └──────┬──────┘
                           │
                           ▼
        ┌──────────────────────────────────┐
        │   ADD ROW KEY TO CIPHERTEXT       │─── 2010
        └──────────────────┬───────────────┘
                           │
                           ▼
        ┌──────────────────────────────────┐
        │   PERFORM DECODING FOR FIRST DATA │─── 2020
        └──────────────────┬───────────────┘
                           │
                           ▼
        ┌──────────────────────────────────┐
        │   PERFORM COLUMN PUNCTURE FOR     │─── 2030
        │   SECOND DATA                     │
        └──────────────────┬───────────────┘
                           │
                           ▼
        ┌──────────────────────────────────┐
        │   PERFORM INVERSE COLUMN          │─── 2040
        │   PERMUTATION FOR THIRD DATA      │
        └──────────────────┬───────────────┘
                           │
                           ▼
        ┌──────────────────────────────────┐
        │   PERFORM INVERSE BYTE            │─── 2050
        │   SUBSTITUTION FOR FOURTH DATA    │
        └──────────────────┬───────────────┘
                           │
                           ▼
        ┌──────────────────────────────────┐
        │   ADD ROW KEY TO FIFTH DATA       │─── 2060
        └──────────────────┬───────────────┘
                           │
                           ▼
        ┌──────────────────────────────────┐
        │   OUTPUT PLAINTEXT DATA           │─── 2070
        └──────────────────┬───────────────┘
                           │
                           ▼
                    ┌─────────────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *3GPP LTE Releases 8/10/11 TSG RAN WG1, http://www.3gpp.org/RAN1-Radio-layer-1*
- Breaking the Gigabit-per-second barrier with 802.11AC. **VAN NEE, R.** Wireless Communications. IEEE, April 2011, vol. 18, 4-7
- IEEE 802.11ad: Defining the Next Generation Multi-Gbps Wi-Fi. **ERAHIA, E. ; CORDEIRO, CARLOS ; MINYOUNG PARK ; YANG, L.L.** CCNC. IEEE, 09 January 2010, 1-5
- **B. ROCHWERGER et al.** The RESERVOIR Model and Architecture for Open Federated Cloud Computing. *IBM Journal of Research and Development,* 2009, vol. 53 (4
- Specification for the Data Encryption Standard (DES). *Federal Information Processing Standards Publication,* January 1977
- Specification for the Data Encryption Standard (DES). *Federal Information Processing Standards Publication,* October 1999
- Specification for the Advanced Encryption Standard (AES). *Federal Information Processing Standards Publication,* November 2001
- **R. MCELIECE.** A public-key cryptosystem based on algebraic coding theory. *DSN Progress Report,* 1978, vol. 42 (44), 114-116
- **R G. GALLAGER.** Low-density parity-check codes. MIT Press, 1963
- **D. J. C. MACKAY ; R. M. NEAL.** Near Shannon limit performance of low density parity check codes. *Electronic Letters,* 1996, vol. 32, 1645-1646
- **E. BOUTILLON ; J. CASTURA ; F. R. KSCHISCHANG.** Decoder-first code design. *Proceedings of the 2nd Int'l Symposium on Turbo Codes and Related Topics,* September 2000, 459-462
- **T. ZHANG ; K. K. PARHI.** VLSI implementation-oriented (3,k)-regular low-density parity-check codes. *2001 IEEE Workshop on Signal Processing Systems,* September 2001, 25-36
- IEEE 802.15.3c: the first IEEE wireless standard for data rates over 1 Gb/s. **BAYKAS, T. ; CHIN-SEAN SUM ; ZHOU LAN ; JUNYI WANG ; RAHMAN, M.A. ; HARADA, H. ; KATO, S.** Communications Magazine. IEEE, July 2011, vol. 49, 114, , 121
- **E. PISEK ; D. RAJAN ; J. CLEVELAND.** Gigabit rate low power LDPC decoder. *ITW 2011,* October 2011, 518-522

- **T. HWANG ; T. RAO.** Secret error-correcting codes (secc). *Proceedings of the 8th annual international Cryptology Conference on Advances in Cryptology,* 1988, 535-563
- **D. GLIGOROSKI ; S. KNAPSKOG ; S. ANDOVA.** Cryptcoding-encryption and error correction coding in a single step. *Proceedings of International Conference on Security and Management. Citeseer,* 2006, 1-7
- High diffusion cipher: Encryption and error correction in a single cryptographic primitive. **C. MATHUR ; K. NARAYAN ; K. SUBBALAKSHMI.** Applied Cryptography and Network Security. Springer, 2006, 309-324
- A mathematical framework for combining error correction and encryption. **C. MATHUR.** Ph.D. dissertation. Stevens Institute of Technology, 2007
- **H. CAM.** A combined encryption and error correction scheme: Aes-turbo. *ISTANBUL University-Journal of Electrical & Electronics Engineering,* 2012, vol. 9
- **O. ADAMO ; M. VARANASI.** Joint scheme for physical layer error-correction and security. *ISRN Communications and Networking,* 2011, vol. 2011
- Differential cryptanalysis of two joint encryption and error correction schemes. **Q. CHAI ; G. GONG.** Global Telecommunications Conference (GLOBECOM 2011). IEEE, 2011, 1-6
- **C. P. GUPTA ; S. GAUTAM.** Joint AES Encryption and LDPC coding. *International Journal of Scientific & engineering Research,* July 2013, vol. 4 (7), 603-606
- The block cipher rijndael. **J. DAEMEN ; V. RIJMEN.** Smart Card Research and Applications. Springer, 2000, 277-284
- **D. J. C. MACKAY.** Good error-correcting codes based on very sparse matrices. *IEEE Transactions on Information Theory,* 1999, vol. 45 (2), 399-431
- **G.J. SULLIVAN ; J.-R. OHM ; W.-J. HAN ; T. WIEGAND.** Overview of the High Efficiency Video Coding (HEVC) Standard. *IEEE Transactions on Circuits and Systems for Video Technology,* September 2012
- **D. A. HUFFMAN.** A method for the construction of minimum redundancy codes. *Proc. IRE,* 1952, vol. 40, 1098-1101

- **NANDAN, S. ; DEEPTHI, P.P. ; STUART, C.M.** Low Complex Crypto Based Channel Coding. *Communication Systems and Network Technologies (CSNT), 2012 International Conference,* 11 May 2012, 863-868
- **SU, Y, XIAO.** Design of LDPC-based Error Correcting Cipher. *International Conference on Wireless, Mobile and Multimedia Networks,* 2008, 470-474
- **S. ABU-SURRA ; E. PISEK ; T. HENIGE.** Gigabit rate achieving low-power LDPC codes: Design and architecture. *WCNC 2011,* March 2011, 1994-1999
- **C. PAAR ; J. PELZL.** Understanding Cryptography. Springer, 2010
- **L. NING ; L. KANFENG ; L. WENLIANG ; D. ZHONGLIANG.** A joint encryption and error correction method used in satellite communications. *Communications,* March 2014, vol. 11 (3), 70-79
- New criteria for linear maps in AES-like ciphers. **J. DAEMEN ; V. RIJMEN.** Cryptography and Comm. Springer, April 2009, 47-69